# EUROPEAN PATENT SPECIFICATION

(11) **EP 3 065 452 B1**
(45) Date of publication and mention of the grant of the patent: **29.08.2018**
(21) Application number: 14857211.8
(22) Date of filing: 17.10.2014
(51) Int. Cl.: H04W 28/04, H04W 72/04, H04L 1/18

(54) **USER TERMINAL, BASE STATION, AND RADIO COMMUNICATION METHOD**
BENUTZERVORRICHTUNG, BASISSTATION UND FUNKKOMMUNIKATIONSVERFAHREN
TERMINAL UTILISATEUR, STATION DE BASE ET PROCÉDÉ DE RADIOCOMMUNICATION

(30) Priority: 31.10.2013 JP 2013226918
(43) Date of publication of application: 07.09.2016
(73) Proprietor: NTT DOCOMO, INC., Chiyoda-ku Tokyo 100-6150 (JP)
(72) Inventor: TAKEDA, Kazuki, Tokyo 100-6150 (JP); JIANG, Huiling, Beijing 100190 (CN); LIU, Liu, Beijing 100190 (CN); MU, Qin, Beijing 100190 (CN)
(74) Representative: Hoffmann Eitle
(86) International application number: PCT/JP2014/077640
(87) International publication number: WO 2015/064378

(56) References cited:
- WO-A2-2013/051913
- HUAWEI ET AL: "Details of TDD-FDD CA", 3GPP DRAFT; R1-134056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717248, Retrieved from the Internet: URL:http://www.3gpp.org/ftp/tsg_ran/WG1_RL 1/TSGR1_74b/Docs/ [retrieved on 2013-09-28]
- ALCATEL-LUCENT ET AL: "A/N transmission on PUCCH for TDD", 3GPP DRAFT; R1-105192 TDD AN FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi' an, China; 201010, 14 October 2010 (2010-10-14), XP050489289, [retrieved on 2010-10-14]
- HUAWEI ET AL.: 'Details of TDD-FDD CA' 3GPP TSG-RAN WG1#74B, RL-134056 XP050717248 Retrieved from the Internet: <URL:http://www.3gpp.org/ftp/tsg_ran/ WG1_RL1/TSGR174b/Docs/R1-134056.zip>
- ETRI: 'Downlink HARQ timing in TDD-FDD carrier aggregation' 3GPP TSG-RAN WG1#74B, RL-134330 XP050717473 Retrieved from the Internet: <URL:http://www.3gpp.org/ ftp/tsg_ran/WG1RL1TSGR174b/Docs/R1-134330. zip>
- LG ELECTRONICS: 'HARQ timing for TDD-FDD carrier aggregation' 3GPP TSG-RAN WG1#74B, R1- 134396 XP050717521 Retrieved from the Internet: <URL:http://www.3gpp.org/ftp/ tsg_ran/WG1_RL1/TSGR1_74b/Docs/R1-134396.zi p>
- QUALCOMM INCORPORATED: 'Solutions for TDD-FDD CA' 3GPP TSG-RAN WG1#74B, RL-134610 XP050717695 Retrieved from the Internet: <URL:http://www.3gpp.org/ftp/tsg_ran/ WG1_RL1/TSGR1_74b/Docs/R1-134610.zip>

## Description

### Technical Field

The present invention relates to a user terminal, a base station and a radio communication method that are applicable to a next-generation communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

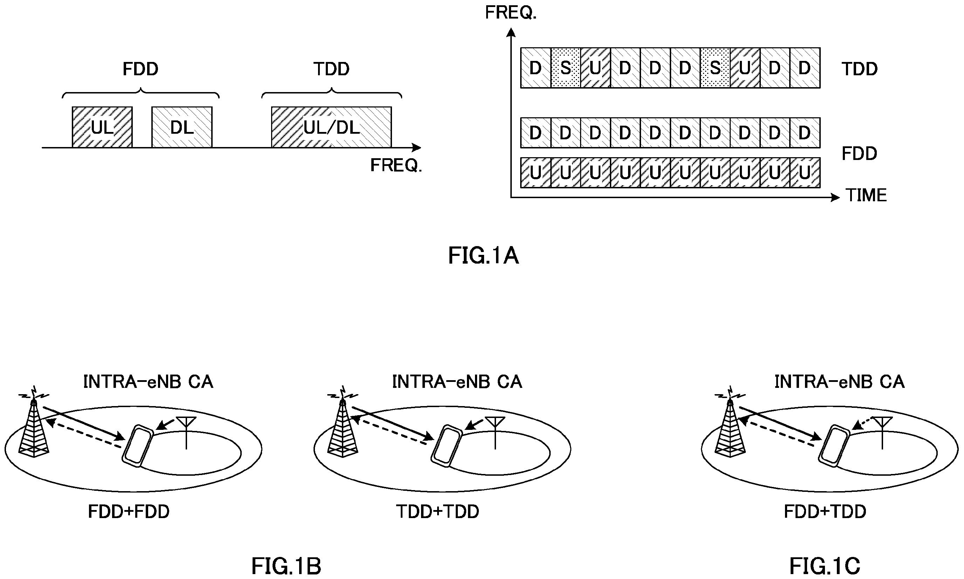

As duplex modes for radio communication in the LTE and LTE-A systems, there are frequency division duplex (FDD) to divide between the uplink (UL) and the downlink (DL) based on frequency, and time division duplex (TDD) to divide between the uplink and the downlink based on time (see FIG. 1A). In the event of TDD, the same frequency region is employed in both uplink and downlink communication, and signals are transmitted and received to and from one transmitting/receiving point by dividing between the uplink and the downlink based on time.

Also, the system band of the LTE-A system (Rel. 10/11) includes at least one component carrier (CC), where the system band of the LTE system constitutes one unit. Gathering a plurality of component carriers (cells) to make a wide band is referred to as "carrier aggregation" (CA).

### Citation List

WO 2013/051913 A2 relates to a method for transmitting uplink control information in a wireless communication system that supports carrier aggregation and operates in a time division duplex (TDD) scheme, the method comprising a step of transmitting a hybrid automatic repeat request-acknowledgement (HARQ-ACK) for each component carrier (CC) according to a specific parameter, wherein if the specific parameter is smaller than a specific value, the HARQ-ACK for each CC is individually transmitted, and if the specific parameter is equal to or larger than the specific value, the HARQ-ACK for each CC is transmitted using the specific number of bit values corresponding to said HARQ-ACK.

### Non-Patent Literature

Non-Patent Literature 1: 3GPP TS 36.300 "Evolved UTRA and Evolved UTRAN Overall Description"

HUAWEI ET AL: "Details of TDD-FDD CA", 3GPP DRAFT; 2013-09-28, relates to Carrier Aggregation using TDD and FDD duplex including the cases in which PUCCH is only transmitted on the PCell, the PCell being FDD and the case in which PUCCH is only transmitted on the PCell, the PCell being TDD, however in the latter case the document only stated that the timing needs to be redesigned.
ALCATEL-LUCENT ET AL: "A/N transmission on PUCCH for TDD", 3GPP DRAFT; 14 October 2010 XP050489289 relates to a 3GPP contribution, wherein a PUCCH A/N channel design is discussed for TDD with CA. The document proposes 4 possible PUCCH A/N designs, including the possibility of applying A/N bundling.

### Summary of Invention

### Technical Problem

In carrier aggregation (CA), which was introduced in Rel. 10/11, the duplex mode to employ between a plurality of CCs (also referred to as "cells," "transmitting/receiving points," etc.) is limited to the same duplex mode (see FIG. IB). On the other hand, future radio communication systems (for example, Rel. 12 and later versions) may anticipate CA to employ different duplex modes (TDD+FDD) between multiple CCs (see FIG.1C).

Also, Rel. 10/11 anticipates intra-base station CA (intra-eNB CA), which controls CA by using one scheduler between multiple CCs. In this case, PUCCH (Physical Uplink Control Channel) signals (delivery acknowledgement signals (ACKs/NACKs), etc.) that are transmitted in each CC in response to DL data signals (PDSCH (Physical Downlink Shared Channel) signals) are multiplexed on a specific CC (primary cell (PCell) and transmitted.

However, when a conventional feedback mechanism is used in CA in which different duplex modes (TDD+FDD) are employed between multiple CCs, there is a risk that delivery acknowledgement signals and so on cannot be transmitted adequately on the uplink.

The present invention has been made in view of the above, and it is therefore an object of the present invention to provide a user terminal, a base station and a radio communication method, whereby uplink transmission can be carried out adequately even when CA is executed by applying different duplex modes between multiple cells.

### Solution to Problem

A user terminal according to the present invention provides a user terminal that communicates with an FDD cell and a TDD cell that employ carrier aggregation, and that has a receiving section that receives DL signals transmitted from each cell, and a feedback control section that allocates and feeds back delivery acknowledgement signals in response to each DL signal in a predetermined UL subframe, and, in this user terminal, the feedback control section aggregates and allocates the delivery acknowledgement signals for the DL signals from each cell, in an uplink control channel in the UL subframe of the TDD cell, and, furthermore, when the number of bits of the delivery acknowledgement signals that are multiplexed in the uplink control channel of the UL subframe of the TDD cell exceeds a predetermined value, applies a feedback mechanism that makes it possible to allocate delivery acknowledgement signals for all DL subframes of the FDD cell, and, compresses and multiplexes a plurality of delivery acknowledgement signals of the FDD cell.

### Advantageous Effects of Invention

According to the present invention, it is possible to carry out uplink transmission adequately even when CA is executed by applying different duplex modes between multiple cells.

### Brief Description of Drawings

FIGs. 1 provide diagrams to explain an overview of duplex modes in LTE and LTE-A, and intra-base station CA (intra-eNB CA);
FIGs. 2 provide diagrams to explain the DL HARQ timings (uplink A/N feedback timings) in FDD and TDD;
FIGs. 3 provide diagrams to explain an example of A/N feedback timings in TDD-FDD CA (method 1);
FIGs. 4 provide diagrams to explain another example of A/N feedback timings in TDD-FDD CA (method 2 and method 3);
FIGs. 5 provide diagrams to explain an example of new HARQ timings in TDD-FDD CA (method 3);
FIGs. 6 provide diagrams to explain another example case where new HARQ timings are applied in TDD-FDD CA (two CCs) (method 3);
FIGs. 7 provide diagrams to explain another example case where new HARQ timings are applied in TDD-FDD CA (two CCs) (method 3);
FIG. 8 is a diagram to explain an example of A/N bundling according to a first example;
FIG. 9 is a diagram to show an example of relationships between a plurality of A/N's and RM codes according to the first example;
FIG. 10 is a diagram to explain an example of channel selection that is employed in TDD;
FIG. 11 is a diagram to show an example of relationships between RM codes and A/N's in channel selection employed in TDD;
FIG. 12 is a diagram to show another example of relationships between RM codes and A/N's in channel selection employed in TDD;
FIG. 13 is a diagram to show another example of relationships between RM codes and A/N's in channel selection employed in TDD;
FIG. 14 is a diagram to show another example of relationships between RM codes and A/N's in channel selection employed in TDD;
FIG. 15 is a diagram to explain an example case (case 1) where new HARQ timings are applied in TDD-FDD CA (five CCs) (method 3);
FIG. 16 is a diagram to explain another example case (case 2) where new HARQ timings are applied in TDD-FDD CA (five CCs) (method 3);
FIG. 17 is a diagram to explain another example case (case 3) where new HARQ timings are applied in TDD-FDD CA (five CCs) (method 3);
FIG. 18 is a diagram to explain another example case (case 4) where new HARQ timings are applied in TDD-FDD CA (five CCs) (method 3);
FIG. 19 is a diagram to explain an example case (case 1) of A/N bundling when new HARQ timings are applied according to a second example (method 3);
FIG. 20 is a diagram to explain another example case (case 2) of A/N bundling when new HARQ timings are applied according to the second example (method 3);
FIG. 21 is a diagram to explain another example case (case 3) of A/N bundling when new HARQ timings are applied according to the second example (method 3);
FIG. 22 is a diagram to explain another example case (case 4) of A/N bundling when new HARQ timings are applied according to the second example (method 3);
FIG. 23 is a schematic diagram to show an example of a radio communication system according to the present embodiment;
FIG. 24 is a diagram to explain an overall structure of a radio base station according to the present embodiment;
FIG. 25 is a diagram to explain a functional structure of a radio base station according to the present embodiment;

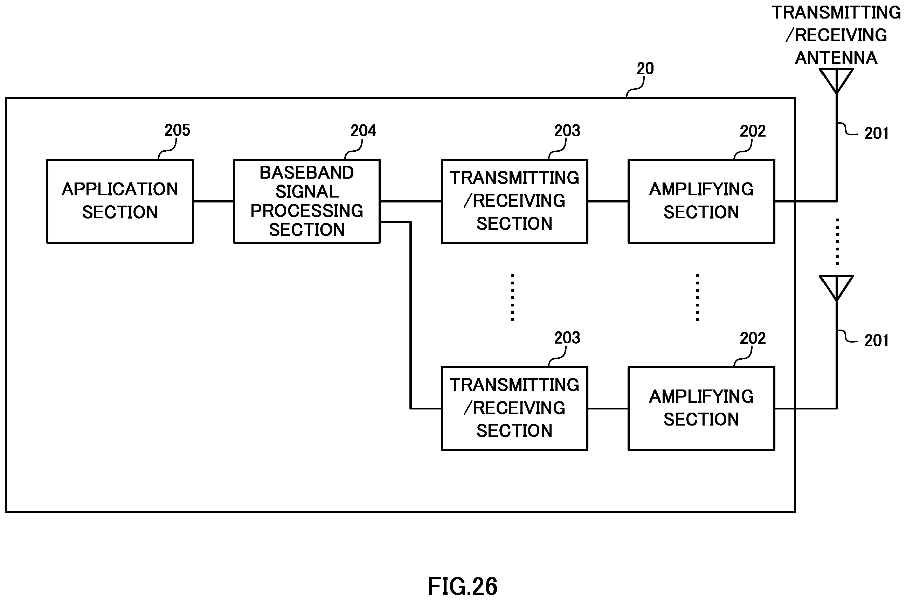

FIG. 26 is a diagram to explain an overall structure of a user terminal according to the present embodiment; and
FIG. 27 is a diagram to explain a functional structure of a user terminal according to the present embodiment.

### Description of Embodiments

As noted earlier, in the LTE and LTE-A systems, two duplex modes -- namely, FDD and TDD -- are stipulated (see above FIG. 1A). Also, from Rel. 10 onward, support for intra-base station CA (intra-eNB CA) has been provided. However, CA in Rel. 10/11 is limited to the use of the same duplex mode (FDD+FDD intra-eNB CA or TDD+TDD intra-eNB CA) (see above FIG. 1B).

Meanwhile, the systems of Rel. 12 and later versions presume intra-base station CA (intra-eNB CA) that employs different duplex modes (TDD+FDD) between multiple CCs (see above FIG. 1C). In intra-base station CA (intra-eNB CA), scheduling is controlled using one scheduler between multiple cells. That is, a user terminal has only to feed back uplink control signals (UCI) such as delivery acknowledgement signals (ACKs/NACKs (hereinafter also referred to as "A/N's")) and/or the like, to a specific cell (primary cell (PCell)) alone.

Meanwhile, when CA is executed by applying different duplex modes between multiple CCs (cells) (TDD-FDD CA), the problem is how a user terminal should feed back A/N's. For example, it may be possible that, in TDD-FDD CA, each cell employs the conventional feedback mechanism on an as-is basis.

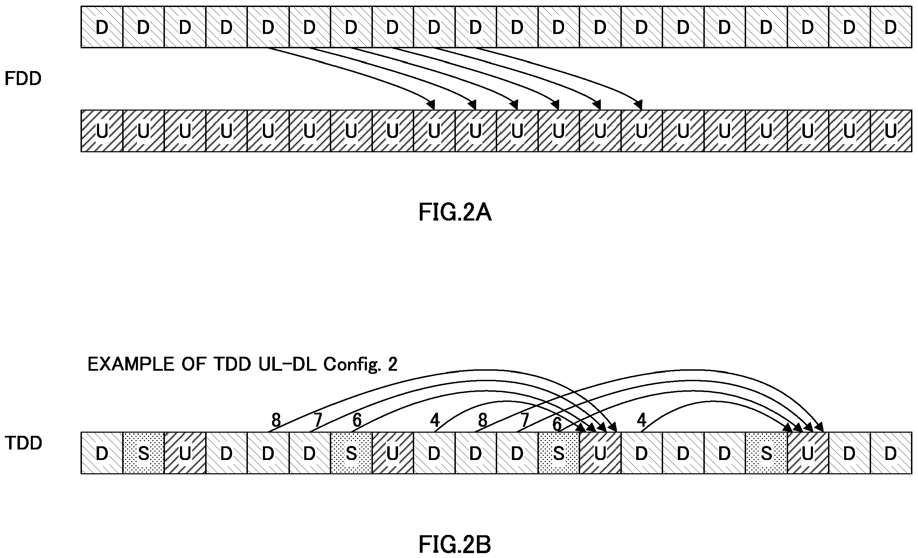

FIG. 2A shows a case where, in a cell in which FDD is employed (hereinafter also referred to as an "FDD cell"), a user terminal feeds back A/N's in response to PDSCH signals in conventional timings. In this case, the user terminal feeds back the A/N's in UL subframes that come a predetermined number of subframes (for example, 4 ms) after the DL subframes where the PDSCH signal is allocated.

FIG. 2B shows a case where, in a cell in which TDD is employed (hereinafter also referred to as a "TDD cell"), a user terminal feeds back A/N's in response to PDSCH signals in conventional timings. In this case, the user terminal feeds back the A/N's in UL subframes that are assigned (associated) in advance to the DL subframes where the PDSCH signal is allocated.

In TDD in Rel. 10, the configuration ratio of UL and DL is stipulated in a plurality of patterns (DL/UL configurations 0 to 6), and, in each DL/UL configuration, the DL subframes to be allocated to UL subframes are determined. For example, FIG. 2B shows the case of the DL/UL configuration 2 (DL/UL Config. 2), in which each DL subframe is allocated to (associated with) a predetermined UL subframe. In FIG. 2B, the number that is assigned to each DL subframe (including special subframes) shows the number of subframe to go back from the corresponding UL subframe.

In Rel. 10, the A/N feedback timings (DL HARQ timings) are the same when CA is employed (see FIG. 1B) and when CA is not employed. In Rel. 11, CA to use multiple TDD cells of varying UL/DL configuration ratios was introduced. In this case, the same A/N feedback timings as in one of the seven patterns of UL/DL configuration ratios (DL/UL configurations 0 to 6) of existing TDD were used. That is, in existing systems, A/N feedback timings that are stipulated in FDD are used in FDD CA, and one pattern of A/N feedback timings stipulated in TDD is used in TDD CA. However, even when CA is applied to UL, A/N transmission using the PUCCH is stipulated to be carried out only in a specific cell (PCell).

In this way, in conventional systems, different PUCCH mechanisms are stipulated between FDD and TDD, and therefore what PUCCH transmission method should be used when CA (TDD-FDD CA) is executed by applying different duplex modes between multiple cells (multiple CCs) poses the problem.

For example, assume a case where, in TDD-FDD CA, the TDD cell is configured to be the PCell (and the FDD cell is configured to be a secondary cell (SCell)), and where A/N feedback and so on are sent by using only the PUCCH of the PCell. That is, the user terminal aggregates A/N's in response to DL signals of the TDD cell and A/N's in response to DL signals of the FDD cell, in the PUCCH of a UL subframe of the TDD cell. As for the A/N feedback timings (HARQ timings) in this case, the present inventors are studying the following three methods.

### <Method 1>

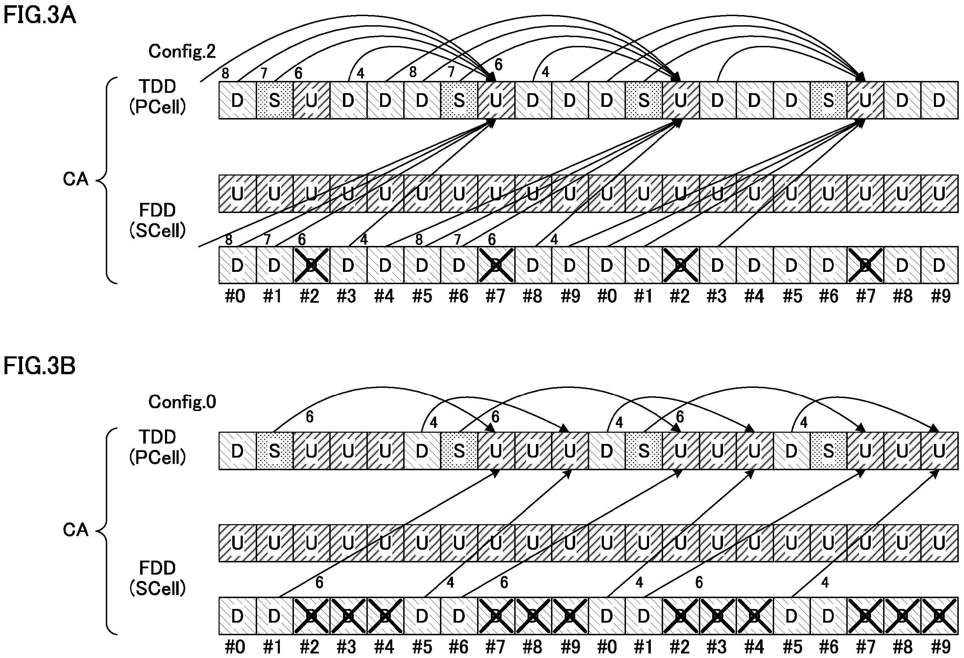

FIG. 3A shows a case where A/N feedback for the FDD cell, which is configured as an SCell, is sent in the same feedback timings as provided in the DL/UL configuration of the TDD cell (PCell) (method 1). To be more specific, FIG. 3A shows a case where, when CA is carried out between the TDD cell (PCell) employing the DL/UL configuration 2 (Config2) and the FDD cell (SCell), A/N feedbacks for the TDD cell and the FDD cell are sent in the feedback timings of the DL/UL configuration 2 of TDD.

In this case, a user terminal can identify the subframes (the TDD cell's UL subframes) to feed back A/N's in response to DL signals transmitted in the FDD cell, without having these specified from the radio base station. By this means, it is not necessary to report new signaling to the user terminal, and, furthermore, it is possible to re-use the mechanism of existing systems. Furthermore, since DL scheduling and the accompanying A/N feedback timings are always the same between the TDD cell and the FDD cell, the base stations can execute scheduling without considering variations in feedback delays between the cells, sand it becomes possible to build a scheduler with simple algorithms.

Meanwhile, when the feedback method of method 1 is used, it becomes difficult to feed back all the A/N's in response to DL signals transmitted in DL subframes of the FDD cell, which is configured as an SCell. For example, it is not possible to feed back A/N's in response to DL signals transmitted in the FDD cell's DL subframes that come in the same timings as the TDD cell's UL subframes in the time domain (SFs #2 and #7 in FIG. 3A). In particular, when the TDD cell (PCell) employs a DL/UL configuration (for example, Config0) in which the proportion of UL subframes is large, method 1 places a significant limitation on the allocation of the FDD cell's DL subframes to the TDD cell's UL subframes (see FIG. 3B). As a result of this, the number of DL subframes that can have A/N feedback among the FDD cell's DL subframes decreases. Since it is not possible to apply scheduling to DL subframes where A/N feedback is not provided, this results in a problem of a significant decrease in the efficiency of the use of DL resources.

### <Method 2>

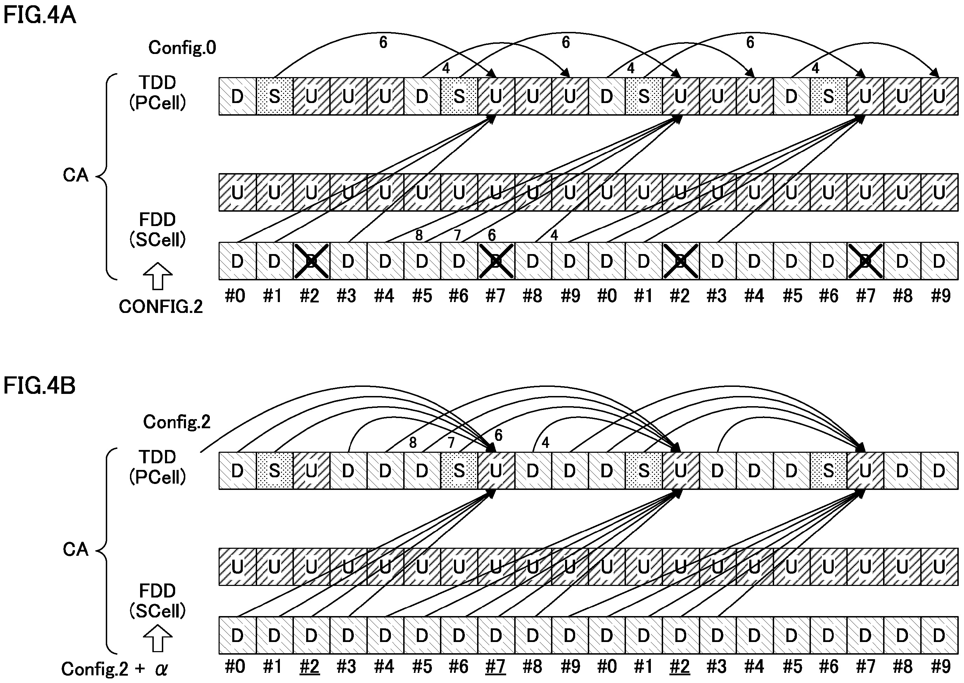

FIG. 4A shows a case where A/N's for the FDD cell (SCell) are controlled in accordance with the feedback timing of another TDD DL/UL configuration, instead of following the feedback timing of the TDD DL/UL configuration that is configured in the PCell (method 2). Note that the TDD DL/UL configuration which the FDD cell employs for feedback timing will be referred to as the "reference DL/UL configuration" ("TDD reference DL/UL configuration").

FIG. 4A shows a case where the TDD cell (PCell) employs the A/N feedback timings of the DL/UL configuration 0 and the FDD cell (SCell) employs the DL/UL configuration 2 as the reference DL/UL configuration. In this case, despite the fact that the TDD cell (PCell) employs a DL/UL configuration in which the proportion of UL subframes is large (for example, Config0), it is still possible to reduce the limitations on the allocation of the FDD cell's DL subframes to the TDD cell's UL subframes. Note that the reference DL/UL configuration which the FDD cell employs may be configured by a higher layer and so on in TDD-FDD CA terminals, or may be determined in advance depending on the DL/UL configuration ratio in the TDD cell (PCell) and so on.

In this way, by applying a reference DL/UL configuration to the FDD cell, it becomes possible to control the A/N feedback timings in the FDD cell, in a flexible manner, regardless of the TDD cell's DL/UL configuration. However, even in the case illustrated in FIG. 4A, again, A/N feedback is not configured in subframes that are directed to UL in the reference DL/UL configuration (SFs #2 and #7 in FIG. 4A), and therefore DL scheduling is not possible with these subframes. In the seven reference DL/UL configurations for existing TDD, the proportion of UL is 10% to 60%, disabling DL allocation by the same proportion.

### <Method 3>

FIG. 4B shows a feedback method (feedback mechanism), by which, in TDD-FDD CA (in which the PCell employs TDD), A/N's in response to all the DL subframes of the FDD cell can be allocated to UL subframes of the TDD cell (method 3). In FIG. 4B, the TDD cell (PCell) employs the A/N feedback timings of the DL/UL configuration 2, and the FDD cell (SCell) employs feedback timings that are based on the DL/UL configuration 2 (reference) and that make it possible to allocate the A/N's of all DL subframes of the FDD cell (DL/UL configuration 2+α).

That is, A/N feedback is sent even for subframes that are directed to UL in the DL/UL configuration 2 (SFs #2 and #7 of the FDD cell in FIG. 4B). Note that the feedback destination of the A/N's of these subframes (SFs #2 and #7) may be, for example, the same feedback destination as that of neighboring subframes. Note that, although the method 3 shown in FIG. 4B illustrates a case where a DL/UL configuration is used as a basis for the FDD cell's A/N feedback timings, the present embodiment is by no means limited to this. Any feedback mechanism may be applicable as long as A/N's for DL subframes of the FDD cell can be allocated.

In this way, in TDD-FDD CA, a study is in progress by the present inventors to alleviate the limitations of A/N feedback (allocation to DL subframes) with respect to the FDD cell that is configured as an SCell, and, furthermore, define new A/N feedback timings in order to improve the flexibility of A/N feedback timings (A/N feedback mechanism).

By virtue of the new A/N feedback mechanism (new HARQ timings) shown in the method 3, even when, in TDD-FDD CA, the TDD cell is configured as the PCell and A/N transmission is carried out by using only the PUCCH of the PCell, it becomes possible to send A/N feedback to meet all the DL signals that are transmitted in the FDD cell's DL subframes. By this means, the base stations can control the allocation of DL data signals (PDSCH signals) flexibly in comparison to method 1 and method 2.

Meanwhile, cases might occur where A/N's in response to all the DL subframes of the FDD cell that are aggregated and fed back in predetermined UL subframes of the TDD cell exceed the number of bits that can be transmitted in the PUCCH formats of existing systems. In this case, there is a threat of making user terminals unable to carry out A/N feedback adequately. Now, the PUCCH formats that can be used with the present embodiment will be described below.

### <PUCCH formats>

In conventional systems, a plurality of formats (PUCCH formats) are stipulated for PUCCH transmission of uplink control signals such as delivery acknowledgement signals (A/N signals), channel quality information (CQI) and so on.

When CA is not employed in an FDD cell (non-CA), the A/N's that are fed back from each user terminal in one subframe are one or two bits. In this case, the user terminals employ PUCCH format 1a/1b and feed back one or two A/N bits by using BPSK or QPSK (by applying BPSK or QPSK modulation).

When CA (two CCs) is employed in the FDD cell, the A/N's that are fed back from each user terminal in one subframe require maximum four bits. In this case, the user terminals can employ channel selection that is based on PUCCH format lb ("PUCCH format lb with channel selection") and transmit maximum four A/N bits.

In PUCCH format lb with channel selection (hereinafter also referred to simply as "channel selection"), maximum four A/N bits are represented by using plurality of PUCCH resource candidates and QPSK symbols. The user terminals select and feed back predetermined PUCCH resources/QPSK symbol points depending on the content of each cell's A/N.

Also, when CA with three or more CCs is employed in the FDD cell, the A/N's that are fed back from each user terminal in one subframe require maximum ten bits (in the event of five CCs). In this case, the user terminals can employ PUCCH format 3 and transmit maximum ten A/N bits.

In TDD, A/N's in response to each of a plurality of DL subframe are allocated in one UL subframe, so that more than two bits of A/N feedback are required even when CA is not employed (non-CA). Consequently, TDD supports A/N bundling, in which A/N's for a plurality of DL subframes are grouped and processed as one A/N. Also, in TDD, even when CA is not employed, it is possible to configure above-mentioned PUCCH format lb with channel selection, PUCCH format 3 and so on.

Also, in TDD, in each CC, A/N's for a plurality of DL subframes are transmitted in one UL. Consequently, when CA (two CCs) is employed in the TDD cell, cases might occur where more than four bits of A/N's are multiplexed in one UL subframe. For example, when, in TDD, CA (two CCs) is executed in the DL/UL configuration 2, the A/N's to feed back in one UL become maximum sixteen bits (four subframes × two CWs × two CCs). As mentioned earlier, when there are more than four bits, TDD in existing systems supports employing A/N spatial bundling and making A/N's for two CWs a one-bit A/N.

By employing spatial bundling of A/N's, a user terminal can feed back maximum eight A/N bits (=16/2) in one UL subframe. Furthermore, in PUCCH format lb with channel selection in TDD, the above maximum eight A/N bits are converted into four bits as in FDD, by using code sequences (RM code input bits). By so doing, it is possible to provide support for feeding back more A/N bits.

Meanwhile, when CA with three or more CCs is employed in the TDD cell, the A/N's that are fed back from each user terminal in one subframe require maximum twenty bits (in the event of five CCs). Consequently, existing PUCCH format 3 in the TDD cell supports feedback of maximum twenty A/N bits.

In this way, when two-CC CA is carried out in a TDD cell, a user terminal can feed back maximum eight bits of A/N's (for example, four bits per cell) by employing PUCCH format lb with channel selection. Also, when CA with three or more CCs (for example, five CCs) is carried out, a user terminal can feed back maximum twenty bits of A/N's (for example, four bits per cell) by employing PUCCH format 3.

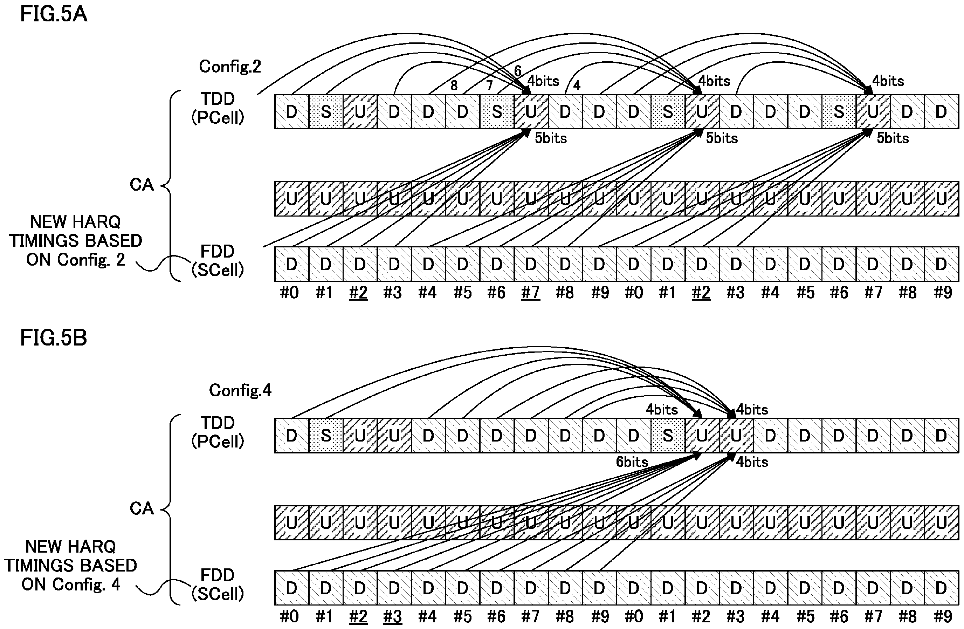

On the other hand, as mentioned earlier, when new HARQ timings (the above method 3) are employed in TDD-FDD CA, there is a threat that the number of A/N bits to be allocated to a UL subframe exceeds the number of bits that can be supported in existing PUCCH formats. For example, when new HARQ timings (the above method 3) are employed in TDD-FDD CA (two CCs), as shown in FIGs. 5, the total number of bits of a plurality of A/N's of the FDD cell, multiplexed on a UL subframe of the TDD cell, becomes greater than a predetermined value (for example, four bits). As a result of this, a user terminal becomes unable to send A/N feedback by employing channel selection.

Note that FIG. 5A shows a case where the TDD cell (PCell) employs the A/N feedback timings of the DL/UL configuration 2 and the FDD cell (SCell) employs DL/UL configuration 2-based new HARQ timings (the above method 3). Also, FIG. 5B shows a case where the TDD cell (PCell) employs the A/N feedback timings of the DL/UL configuration 4, the FDD cell (SCell) employs DL/UL configuration 4-based new HARQ timings (the above method 3).

Also, when new HARQ timings (the above method 3) are employed in TDD-FDD CA (three CCs or more), if more than four bits (for example, five bits) of A/N's from one FDD cell are multiplexed in a UL subframe of the TDD cell, the total becomes greater than twenty bits. In this case, a user terminal becomes unable to send A/N feedback by employing PUCCH format 3.

In this way, the present inventors have found out that, if, in TDD-FDD CA, the TDD cell is configured as the PCell (and the FDD cell is configured as an SCell) and each cell's A/N is aggregated and allocated in the PCell's PUCCH, cases might occur where existing PUCCH formats become inapplicable when a new A/N feedback mechanism (the above method 3) is employed.

The present inventors have come up with the idea of employing a new A/N feedback mechanism when, in TDD-FDD CA, A/N's of multiple CCs (TDD cell and FDD cell) are aggregated, allocated and fed back in a UL subframe of the TDD cell, and compressing a plurality of A/N's of the FDD cell when the number of A/N bits to be multiplexed in the PUCCH in a UL subframe of the TDD cell exceeds a predetermined value.

As for the method of compressing delivery acknowledgement signals, a method to use A/N bundling may be used, and/or the code sequences (RM code input bits) for use in TDD channel selection can be defined anew for a plurality of A/N's of the FDD cell and used. For example, A/N bundling in the time direction may be applied to delivery acknowledgement signals that correspond to a plurality of DL subframes of the FDD cell respectively and that are allocated to the same UL subframe. Alternatively, it may be possible to define new code sequence bits for a combination of a plurality of delivery acknowledgement signals of the FDD cell that exceeds a predetermined value for multiplexing in the same UL subframe, and apply channel selection.

In TDD-FDD CA (in which the PCell employs TDD), it becomes possible to allocate all the DL subframes of the FDD cell to UL subframes of the TDD cell by employing new HARQ timings (the above method 3). Furthermore, even when new HARQ timings are employed, it is possible to employ existing PUCCH formats by compressing the SCell's A/N's so that the number of A/N bits that are multiplexed in a UL subframe of the TDD cell stays equal to or less than a predetermined value (that is, does not exceed the predetermined value).

Now, specific A/N feedback control according to the present embodiment will be described below in detail with reference to the accompanying drawings. Note that, in the following description, cases that are based on the DL/UL configuration 2 or the DL/UL configuration 4 will be described as examples of new HARQ timing for use by the FDD cell, the new HARQ timings applicable to the present embodiment are by no means limited to these. Also, the present embodiment is by no means limited to intra-base station CA (TDD-FDD CA), and is equally applicable to inter-base station CA (TDD-FDD CA), in which schedulers are provided separately for each of multiple cells and scheduling is separately controlled in each cell.

### (First Example)

An A/N feedback method for up to two CCs in TDD-FDD CA will be described with a first example. Note that a case will be described with the following description where the TDD cell is configured as the PCell (and the FDD cell is configured as an SCell), and A/N's for multiple CCs (TDD cell and FDD cell) are aggregated, allocated and sent by way of PUCCH transmission in an uplink control channel in a UL subframe of the TDD cell. Furthermore, a case will be described here where a user terminal employs new HARQ timings (the above method 3).

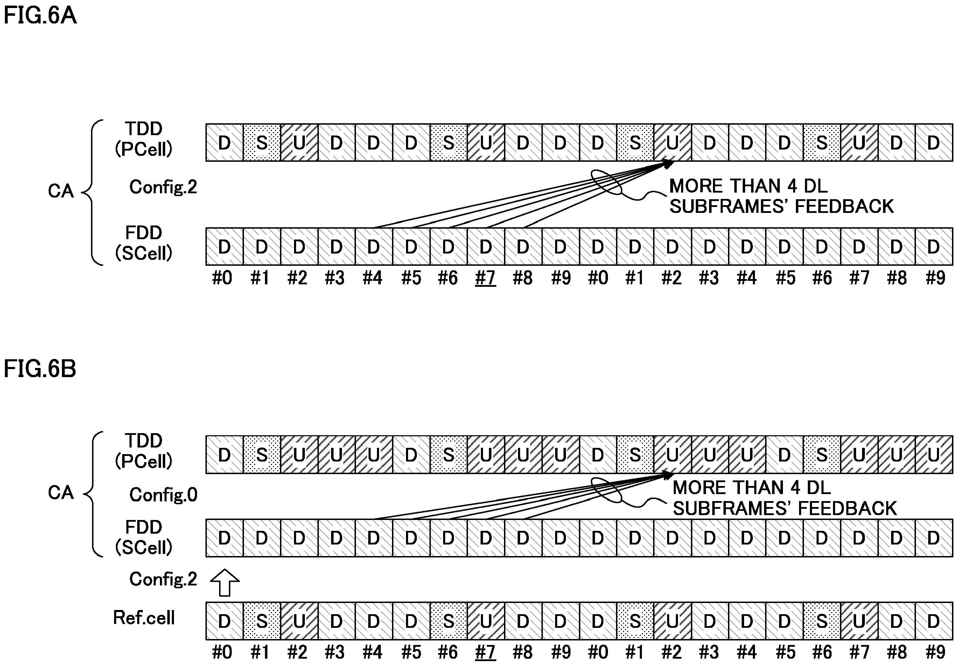

FIG. 6A shows a case where, in CA between a TDD cell (PCell) employing the DL/UL configuration 2 and an FDD cell (SCell), a new HARQ timing that is based on the DL/UL configuration 2, which is employed in the TDD cell, is applied to the FDD cell. FIG. 6B shows a case where, in CA between a TDD cell (PCell) to employ the DL/UL configuration 0 and an FDD cell (SCell), a new HARQ timing that is based on the DL/UL configuration 2, which is different from the DL/UL configuration of the TDD cell, is applied to the FDD cell. Note that, in FIGs. 6, the FDD cell's UL subframes are omitted.

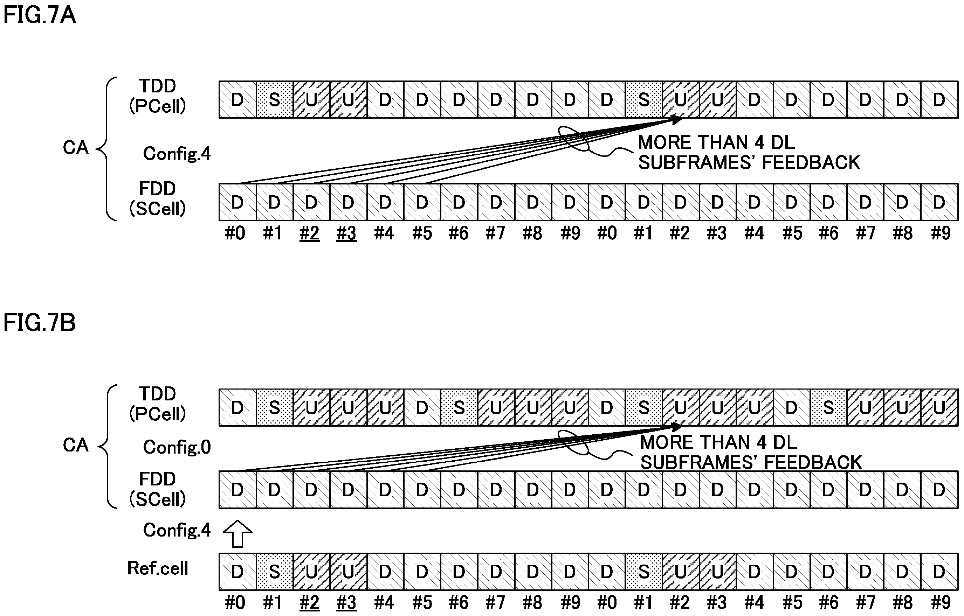

Also, FIG. 7A shows a case where, in CA between a TDD cell (PCell) to employ the DL/UL configuration 4 and an FDD cell (SCell), a new HARQ timing that is based on the DL/UL configuration 4, which is employed in the TDD cell, is applied to the FDD cell. FIG. 7B shows a case where, in CA between a TDD cell (PCell) to employ the DL/UL configuration 0 and an FDD cell (SCell), a new HARQ timing that is based on the DL/UL configuration 4, which is different from the DL/UL configuration of the TDD cell, is applied to the FDD cell.

In the cases illustrated in FIGs. 6A and 6B, the number of DL subframes of the FDD cell to be allocated to an uplink control channel in a specific UL subframe (SF #2) of the TDD cell exceeds a predetermined value (for example, four). As a result of that, the FDD A/N's to be multiplexed in an uplink control channel in a specific UL subframe (SF #2) of the TDD cell exceed a predetermined value (for example, four bits). In this case, it becomes not possible to employ PUCCH format lb with channel selection.

Similarly, in the cases illustrated in FIGs. 7A and 7B, the A/N's for a plurality of DL subframes of the FDD cell to be multiplexed in a specific UL subframe (SF #2) of the TDD cell exceed a predetermined value (for example, four bits). In this case, it becomes not possible to employ PUCCH format 1b with channel selection.

Consequently, with the present embodiment, a plurality of A/N's of the FDD cell are compressed so that the number of A/N bits that are multiplexed in a UL subframe of the TDD cell does not exceed a predetermined value. That is, a user terminal controls the compression of the SCell's A/N's depending on the number of A/N bits to be multiplexed in a UL subframe of the TDD cell. Now, for the method of compressing A/N's, a case to use A/N bundling (compression method 1) and a case to use the code sequences (RM code input bits) for use in TDD channel selection (compression method 2) will be described below.

### (Compression Method 1)

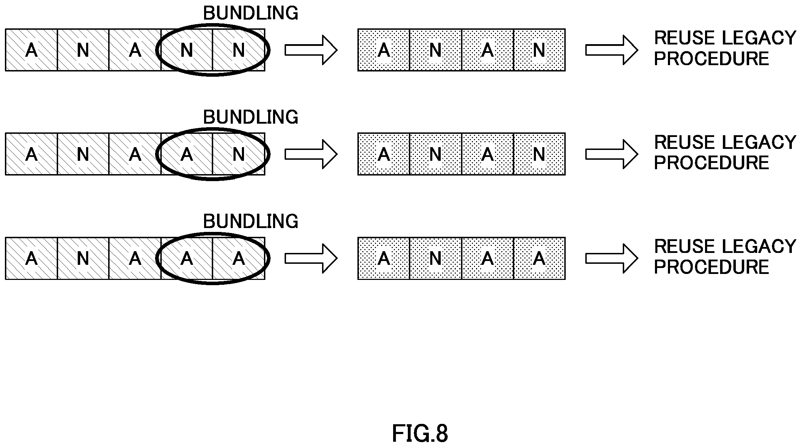

With a compression method 1, each cell (for example, the FDD cell that is configured as an SCell) employs A/N bundling in the time direction when a plurality of A/N's that are multiplexed in a specific UL exceed a predetermined number of bits (for example, four bits). For example, when five A/N bits are multiplexed in a UL subframe (when the number of DL subframes allocated to a UL subframe is five), A/N bundling is applied to part of the A/N's so as to keep the A/N's equal to or less than a predetermined value (see FIG. 8).

FIG. 8 presumes cases where five FDD DL subframes are allocated to a TDD UL subframe. In this case, where there are a plurality of DL subframes, a user terminal selects the A/N's of part of the DL subframes and applies A/N bundling, thereby compressing the A/N's from five bits to four bits. Note that, although FIG. 8 shows cases where A/N bundling is applied to the A/N's of two subframes that are placed late in the time domain, the subframes to which A/N bundling can be applied are not limited to these. Still, by making arrangements so that the A/N's of predetermined subframes are bundled, when a base station executes DL scheduling, it becomes possible execute control so that unimportant data is placed in subframes that are subject to A/N bundling and important data is placed in subframes that are not subject to bundling.

In A/N bundling, decisions are made so that, where there are A/N's that are bundled, a NACK is returned if there is a single NACK (or DTX) and an ACK is returned if all are ACKs. Note that, after a plurality of A/N bits are compressed to a predetermined value or less by A/N bundling, existing A/N feedback can be employed. If the result of bundling in a user terminal produces a NACK, the base station retransmits both of the two subframes.

Note that, when A/N's are fed back with uplink data (PUSCH signal) simultaneously, the A/N's can be multiplexed with the PUSCH and fed back. The PUSCH has large resource capacity compared to the PUCCH, so that, when transmitting an uplink data signal (PUSCH signal), it is preferable that a user terminal multiplex a plurality of A/N's on the PUSCH and send feedback, without applying A/N bundling, even if the number of A/N bits that are multiplexed exceeds a predetermined value.

For example, in the case illustrated in above FIG. 6, a plurality of DL subframes (SFs #4, #5, #6, #7 and #8) of the FDD cell are allocated to a specific UL subframes (SF #2) of the TDD cell. Consequently, among these multiple DL subframes, the user terminal applies A/N bundling in the time direction to the A/N's of part of the DL subframes. For example, if DL signals are allocated to all of a plurality of DL subframes (SF #4, #5, #6, #7 ad #8) of the FDD cell, the user terminal applies A/N bundling to SFs #7 and #8 and compresses the number of A/N bits to four bits. Note that, when the number of A/N's to multiplex is equal to or less than predetermined value (when no DL signal is scheduled in one of SFs #4 to #8, and so on), the user terminal feeds back the A/N's without compressing the A/N's (without applying A/N bundling).

Also, in the cases illustrated in above FIGs. 7, a plurality of DL subframes (SFs #0, #1, #2, #3, #4 and #5) of the FDD cell are allocated to a specific UL subframes (SF #2) of the TDD cell. Consequently, among these multiple DL subframes (SFs #0, #1, #2, #3, #4 and #5), the user terminal applies A/N bundling in the time direction to the A/N's of part of the DL subframes. For example, when the number of A/N bits of the FDD cell to be multiplexed on the TDD cell's PUCCH is six bits, the user terminal may select a combination of three A/N's and apply A/N bundling (to compress three bits into one bit), or select two combinations of two A/N's and apply A/N bundling (to compress two bits into one bit × 2).

In this way, even when the number of A/N bits that are multiplexed in a UL subframe exceeds a predetermined value, A/N bundling is applied to a plurality of A/N's to compress the number of bits to a predetermined value or less, and the resulting A/N's are multiplexed. By this means, even when new HARQ timings are applied, it is possible to employ PUCCH format lb with channel selection.

### (Compression Method 2)

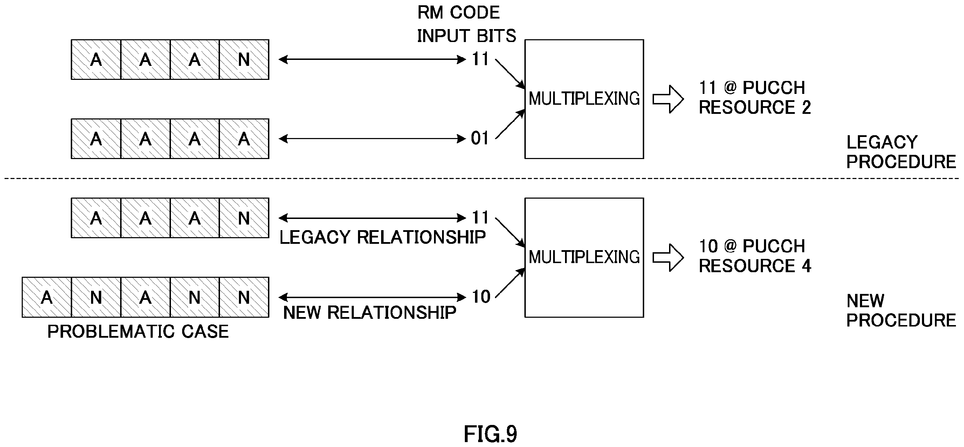

With a compression method 2, when a plurality of A/N's to multiplex in a specific UL subframe exceeds a predetermined number of bits (for example, four bits), the code sequences (RM code input bits) for use in TDD channel selection are defined anew for the combinations of A/N's (A/N states), and feedback is sent (see FIG. 9).

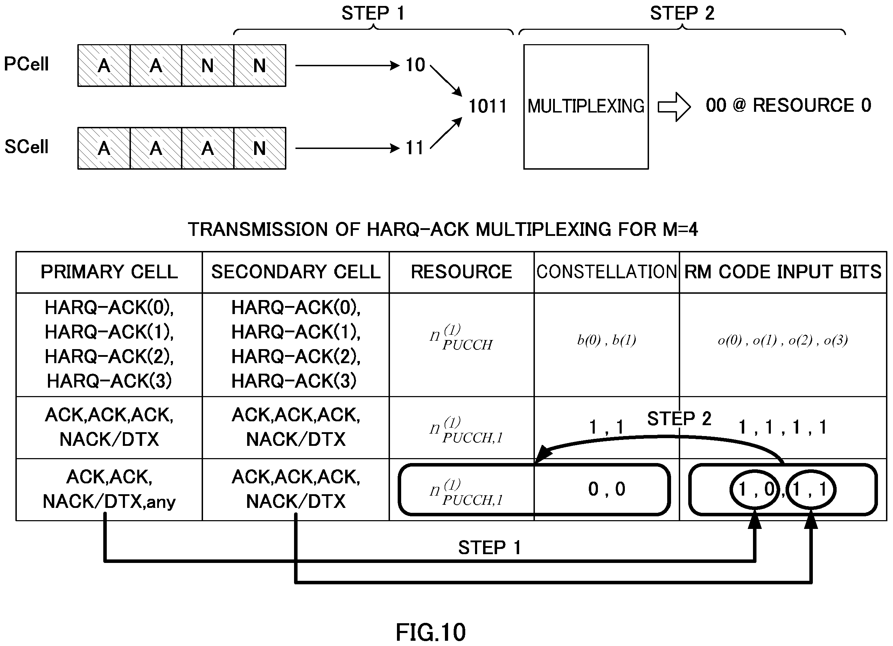

First, the code sequences for use in TDD channel selection (RM code input bits) will be described with reference to FIG. 10. TDD supports each CC to feed back maximum four bits of A/N's. In this case, first, the combinations of A/N's of each CC (PCell or SCell) are allocated to predetermined code sequences (RM code input bits) (step 1).

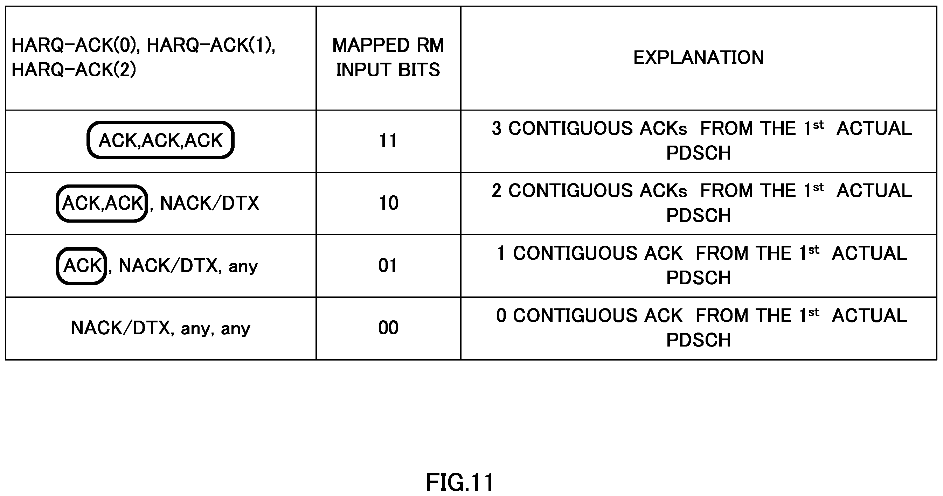

Note that the bits to constitute the code sequences corresponding to each combination of A/N's are defined in advance. FIG. 11 is a table showing the relationships between three combinations of A/N's and code sequences. The combinations of A/N's are sorted depending the number of ACKs that continue from the retransmission control decision in response to the PDSCH that is transmitted first. That is, if A/N's are provided in three bits (that is, if three A/N's are combined), the number of ACKs that continue from the first-transmitted PDSCH is 0, 1, 2 and 3, defining four states. To be more specific, the code sequence "11" can be assigned when three ACKs continue from the first-transmitted PDSCH, "10" can be assigned when two ACKs continue, "01" can be assigned when there is one ACK, and "00" can be assigned when the first-transmitted PDSCH does not return an ACK.

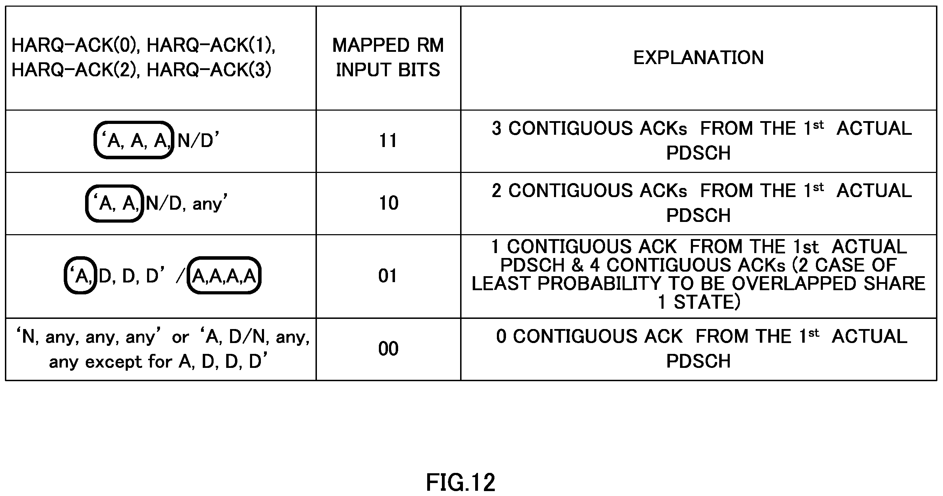

FIG. 12 is a table to show the relationships between four combinations of A/N's and code sequences. In this case, the number of ACKs that continue from the first-transmitted PDSCH is 0, 1, 2, 3 and 4, providing five states. If the number of bits of a code sequence is two, two states among the five states need to be defined in an overlapping manner.

For example, the code sequence "01" is assigned when four ACKs continue from the first-transmitted PDSCH, "11" is assigned when three ACKs continue, '"10" is assigned when two ACKs continue, "01" is assigned when there is one ACK, and "00" is assigned when the first-transmitted PDSCH does not return an ACK. The same code sequence "01" is defined in the case four ACKs continue and in the case there is one ACK (ACKs do not continue).

In this way, it is possible to assign the combinations of a plurality of A/N's (three bits or four bits) of each CC to predetermined code sequences (RM code input bits) and represent each with two bits. In FIG. 10, in step 1, the combination of A/N's in the PCell (A, A, N/D, any) is assigned to the code sequence "1, 0," and the combination of A/N's in the SCell (A, A, A, N/D) is assigned to the code sequence "1, 1." That is, the A/N's of the PCell and the SCell become "1011."

Following this, the user terminal multiplexes the code sequences (RM code input bits) on predetermined PUCCH resources/QPSK symbol points depending on the contents of each cell's A/N's, and sends feedback (step 2). That is, the user terminal sends A/N feedback by combining predetermined PUCCH resources, QPSK symbol points and code sequences in accordance with the contents of A/N's.

With the present embodiment, when a combination of a plurality of A/N's of the FDD cell is allocated to a UL subframe beyond a predetermined value (for example, four bits), a new code sequence of bits (RM code input bits) is defined, and channel selection is applied. For example, when the number of A/N's of the FDD cell that are multiplexed in a UL subframe exceeds a predetermined value, a newly defined code sequence (RM code input bits) is assigned to this combination of A/N's (see FIG. 9).

In FIG. 9, when the A/N's of the FDD cell to be multiplexed in a TDD UL subframe is five bits (for example, see FIG. 6A), the code sequence "10" is assigned to the five-bit A/N's. Meanwhile, in the TDD cell, four bits of A/N's are multiplexed, so that, with reference to the table shown in above FIG. 12, the code sequence "11" is assigned. That is, the user terminal assigns a newly defined code sequence when the number of A/N bits exceeds a predetermined value (problematic case), and assigns the code sequences defined in above FIG. 11 and FIG. 12 when the number of A/N bits is equal to or less than a predetermined value.

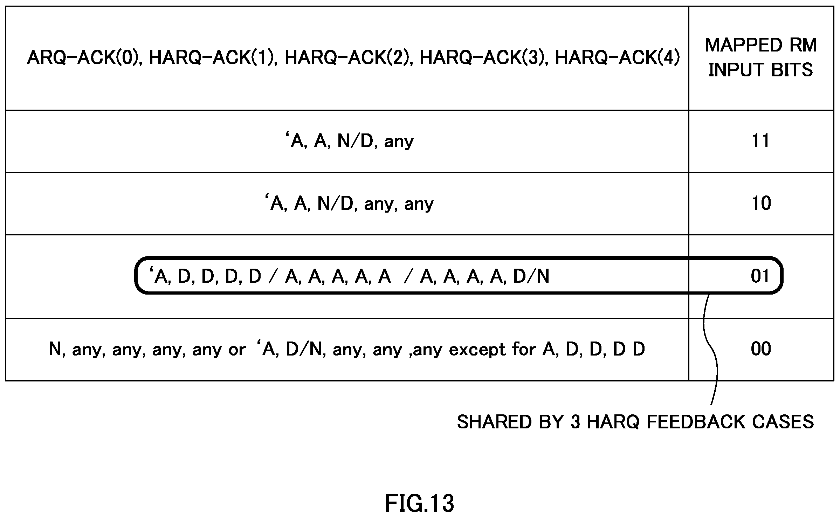

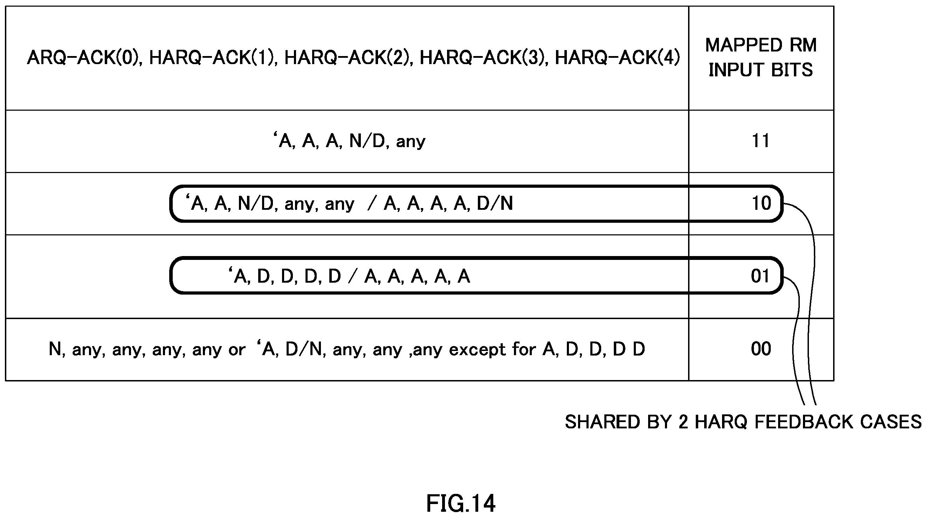

In this way, the user terminal assigns a two-bit code sequence to each of a first combination of A/N's allocated to an UL subframe with a number of bits equal to or less than predetermined value and a second combination of A/N's allocated with a greater number of bits than the predetermined value, with reference to mutually different tables. Examples of the table to use for the second combination of A/N's are shown in FIGs. 13 and 14.

FIG. 13 and FIG. 14 show the relationships between combinations of five A/N's (five bits) and code sequences (two bits). In this case, the number of ACKs that continue from the first-transmitted PDSCH is 0, 1, 2, 3, 4 and 5, providing six states. If the number of bits of a code sequence is two, at least two states among the six states need to be defined in an overlapping manner.

FIG. 13 shows a case where one code sequence ("01") defines three combination of A/N's in an overlapping manner. To be more specific, the case where five ACKs continue from the first-transmitted PDSCH, the case where four ACKs continue, and the case where there is one ACK (ACKs do not continue) are defined with the same code sequence "01" (option 1). By making these arrangements, it is possible to handle the case where there are five bits of A/N's, without changing the combinations of A/N's defined with code sequences other than "01." In other words, five bits of A/N's can be applied such that the point of change from existing algorithm is the minimum, so that there is an advantage that the processing load in terminals and base stations can be reduced.

FIG. 14 shows a case where two code sequences ("10" and "01") each define two combinations of A/N's in an overlapping manner. To be more specific, the case where five ACKs continue from the first-transmitted PDSCH and the case where there is one ACK (ACKs do not continue) are defined with the same code sequence "01," and the case where four ACKs continue from the first-transmitted PDSCH and the case where two ACKs continue are defined with the same code sequence "10" (option 2). By making such arrangements, it is possible to minimize the number of combinations of A/N's which one code sequence designates, so that there is an advantage that A/N's which terminals actually receive can be transmitted to base stations more accurately.

Note that, with the present embodiment, the relationships between the combinations of A/N's and code sequences are not limited to the cases illustrated in FIG. 13 and FIG. 14.

### (Second Example)

An A/N feedback method for three CCs or more in TDD-FDD CA will be described with a second example. Note that a case will be described with the following description where the TDD cell is configured as the PCell (and the FDD cell is configured as an SCell), and PUCCH transmission is carried out by aggregating A/N's for multiple CCs (TDD cell and FDD cell) in an uplink control channel in an UL subframe of the TDD cell. Furthermore, a case will be described here where a user terminal employs new HARQ timings (the above method 3).

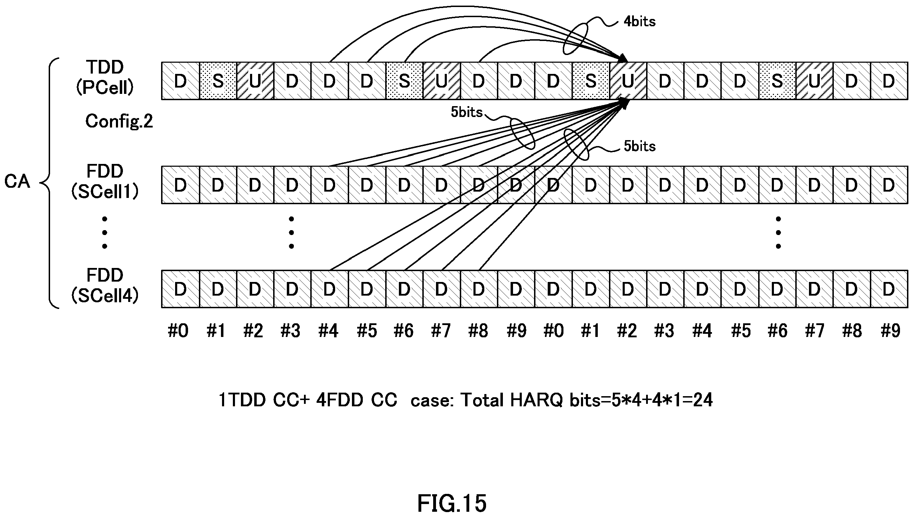

First, as cases where three or more CCs (for example, five CCs) execute CA and the number of A/N bits that are allocated to a specific UL subframe of the TDD cell exceeds twenty bits due to the use of new HARQ timings will be described using four examples cases (see FIG. 15 to FIG. 18). Note that the FDD cell's UL subframes are omitted in FIG. 15 to FIG. 18, and DL subframes alone are shown.

### <Case 1>

FIG. 15 shows a case where, in CA among a TDD cell (PCell) to employ the DL/UL configuration 2 and FDD cells (SCells 1 to 4), a new HARQ timing that is based on the DL/UL configuration 2, which is employed in the TDD cell, is applied to the FDD cells. In this case, the number of DL subframes to be allocated from the FDD cell of each CC to an uplink control channel in a specific UL subframe (SF #2) of the TDD cell exceeds a predetermined value (for example, four) (here, the number of DL subframes from each SCell is five). As a result of this, the number of A/N bits for the TDD cell and a plurality of FDD cells that are multiplexed in an uplink control channel in a specific UL subframe (SF #2) of the TDD cell exceeds a predetermined value (for example, twenty bits) (here, becomes twenty-four bits). In this case, it becomes not possible to employ PUCCH format 3.

### <Case 2>

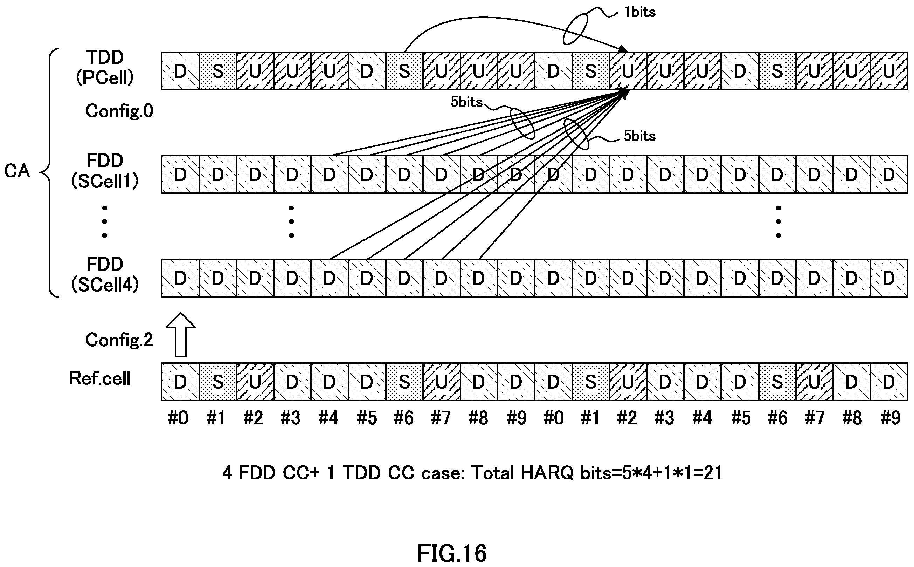

FIG. 16 shows a case where, in CA among a TDD cell (PCell) to employ the DL/UL configuration 0 and FDD cells (SCells 1 to 4), a new HARQ timing that is based on the DL/UL configuration 2, which is different from the DL/UL configuration of the TDD cell, is applied to the FDD cells. In this case, the number of DL subframes to be allocated from the FDD cell of each CC to an uplink control channel in a specific UL subframe (SF #2) of the TDD cell exceeds a predetermined value (here, the number of DL subframes from each SCell is five). As a result of this, the number of A/N bits for the TDD cell and a plurality of FDD cells that are multiplexed in an uplink control channel in a specific UL subframe (SF #2) of the TDD cell exceeds a predetermined value (here, becomes twenty-one bits), and it becomes not possible to employ PUCCH format 3.

### <Case 3>

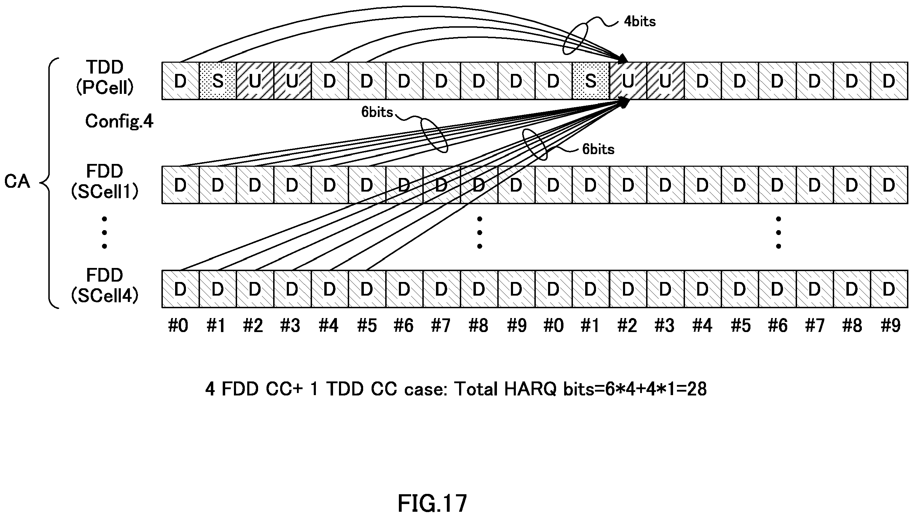

FIG. 17 shows a case where, in CA among a TDD cell (PCell) to employ the DL/UL configuration 4 and FDD cells (SCells 1 to 4), a new HARQ timing that is based on the DL/UL configuration 4, which is employed in the TDD cell, is applied to the FDD cells. In this case, the number of DL subframes to be allocated from the FDD cell of each CC to an uplink control channel in a specific UL subframe (SF #2) of the TDD cell exceeds a predetermined value (here, the number of DL subframes from each SCell is six). As a result of this, the number of A/N bits for the TDD cell and a plurality of FDD cells that are multiplexed in an uplink control channel in a specific UL subframe (SF #2) of the TDD cell exceeds a predetermined value (here, becomes twenty-eight bits), and it becomes not possible to employ PUCCH format 3.

### <Case 4>

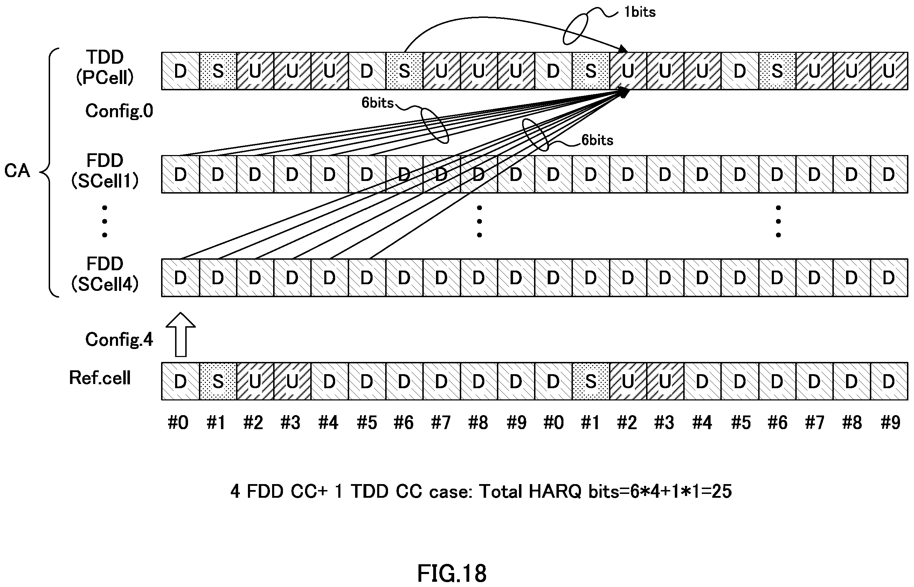

FIG. 18 shows a case where, in CA among a TDD cell (PCell) to employ the DL/UL configuration 0 and FDD cells (SCells 1 to 4), a new HARQ timing that is based on the DL/UL configuration 4, which is different from the DL/UL configuration of the TDD cell, is applied to the FDD cells. In this case, the number of DL subframes to be allocated from the FDD cell of each CC to an uplink control channel in a specific UL subframe (SF #2) of the TDD cell exceeds a predetermined value (here, the number of DL subframes from each SCell is six). As a result of this, the number of A/N bits for the TDD cell and a plurality of FDD cells that are multiplexed in an uplink control channel in a specific UL subframe (SF #2) of the TDD cell exceeds a predetermined value (here, becomes twenty-five bits), and it becomes not possible to employ PUCCH format 3.

Consequently, with the present embodiment, the A/N's of each CC (for example, a plurality of FDD cells) are compressed so that the number of A/N bits that are multiplexed in a UL subframe of the TDD cell (PCell) does not exceed a predetermined value. That is, a user terminal controls the compression of A/N's of each SCell depending on the number of A/N bits that are multiplexed in a UL subframe of the TDD cell. Cases of applying the present embodiment to above case 1 to case 4 will be described below.

### <Case 1>

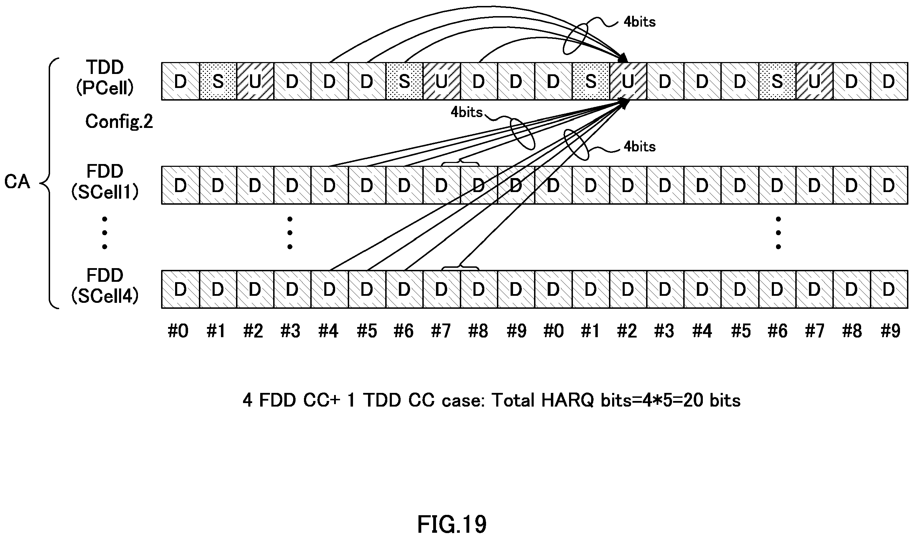

FIG. 19 shows a case where, when the new HARQ timing shown in above FIG. 15 is employed, A/N bundling in the time direction is applied to the A/N's of part of the DL subframes among the DL subframes (SFs #4, #5, #6, #7 and #8) of each SCell (FDD cell) that can be allocated to a specific TDD UL subframe (SF #2). Note that the DL subframes to which A/N bundling is applied can be controlled on a per CC basis. Here, a case is shown where A/N bundling is applied to the A/N's of DL subframes 7 and 8 in each SCell. By this means, even when the new HARQ timing is employed, a user terminal can send A/N feedback by employing PUCCH format 3.

### <Case 2>

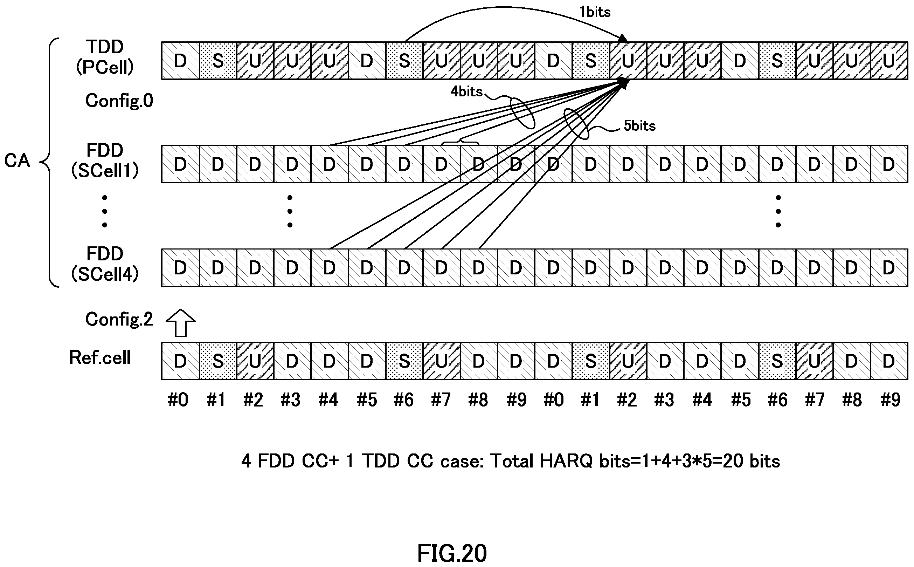

FIG. 20 shows a case where, when the new HARQ timing shown in above FIG. 16 is employed, A/N bundling in the time direction is applied to the A/N's of part of the cells among the DL subframes (SFs #4, #5, #6, #7 and #8) of each SCell (FDD cell) that can be allocated to a specific TDD UL subframe (SF #2). Here, A/N bundling is applied to the A/N's of DL subframes 7 and 8 in SCell 1, and A/N bundling is not applied to SCell 2 to SCell 4. That is, since the number of A/N bits in the TDD cell is one, the number of A/N bits from each SCell can be made greater than four bits, within a range the number of A/N bits from the five CCs does not exceed twenty.

As for the priorities in applying A/N bundling, the secondary cells (FDD cells) are prioritized over the primary cell (TDD cell). Also, if there are multiple secondary cells, it is possible to determine the application of A/N bundling in the order of the index numbers assigned to the secondary cells. Note that, if part of the secondary cells are configured as TDD cells, A/N bundling can be applied by prioritizing the FDD cells over the TDD cells. By so doing, it is possible to determine the order of priorities in applying A/N bundling, without introducing new higher layer signaling to indicate the order of priorities.

On the other hand, it is possible to introduce new higher layer signaling to indicate the order of priorities in applying A/N bundling. By this means, the order of priorities in applying A/N bundling can be designated apart from the primary-secondary relationship, which indicates the order of the priorities of cells in CA, and the index numbers of the secondary cells. In environments where CA is carried out between a macro cell and a small cell, such as those shown in FIG. 1B and FIG. 1C, cases might occur where the cell having the wider band/higher capacity is always the primary cell, or cases might even occur where the newest secondary cell (that is, the one that is added the most recently), not the secondary cell having the lowest index number, has the largest capacity. Consequently, by making it possible to configure the order of priorities in applying A/N bundling differently from the order of the priorities of cells, more flexible CA operation becomes possible.

### <Case 3>

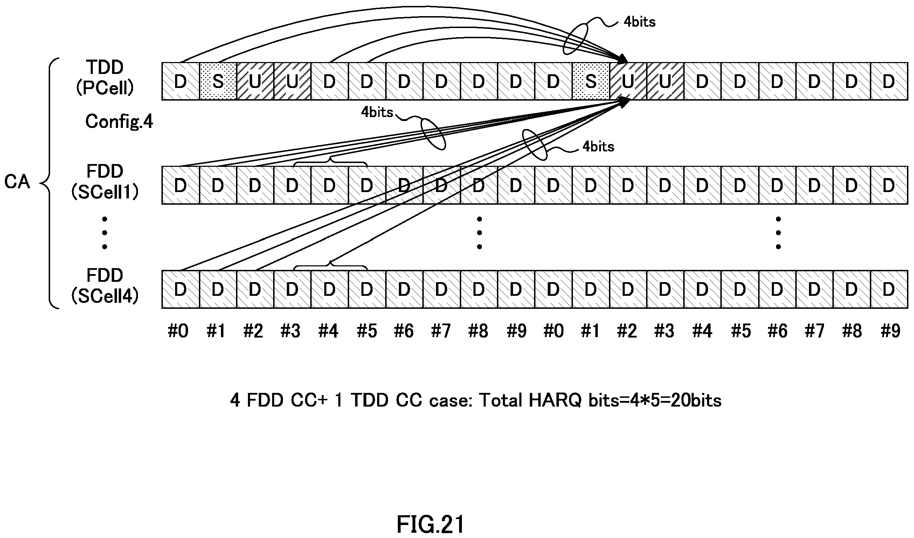

FIG. 21 shows a case where, when the new HARQ timing shown in above FIG. 17 is employed, A/N bundling in the time direction is applied to the A/N's of part of the DL subframes among the DL subframes (SFs #0, #1, #2, #3, #4 and #5) of each SCell (FDD cell) that can be allocated to a specific TDD UL subframe (SF #2). Here, a case is shown where A/N bundling is applied to the A/N's of DL subframes 3, 4 and 5 in each SCell. By this means, even when the new HARQ timing is employed, a user terminal can send A/N feedback by employing PUCCH format 3. Note that the combination of DL subframes to which A/N bundling is applied is not limited to the case illustrated in FIG. 21.

### <Case 4>

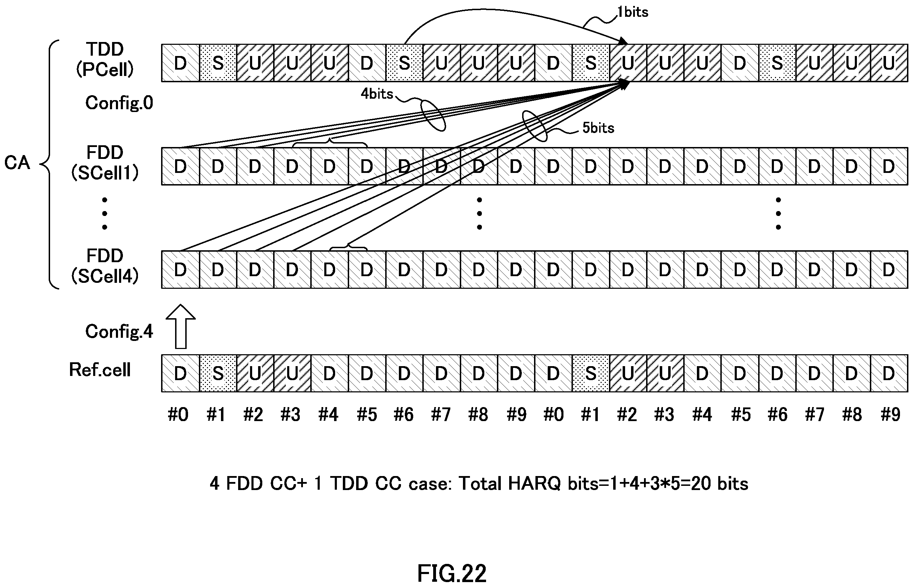

FIG. 22 shows a case where, when the new HARQ timing shown in above FIG. 18 is employed, A/N bundling in the time direction is applied to the A/N's of part of the CCs among the DL subframes (SFs #0, #1, #2, #3, #4 and #5) of each SCell (FDD cell) that can be allocated to a specific TDD UL subframe (SF #2). Here, A/N bundling is applied to the A/N's of DL subframes 3, 4 and 5 in SCell 1, and A/N bundling is applied to the A/N's of DL subframes 4 and 5 in SCell 2 to SCell 4. That is, since the number of A/N bits in the TDD cell is one, the number of A/N bits from each SCell can be made greater than four bits, within a range the number of A/N bits from the five CCs does not exceed twenty. Note that the combination of DL subframes to which A/N bundling is applied is not limited to the case illustrated in FIG. 22.

In this way, as shown in FIG. 19 to FIG. 22, when the new HARQ timings make the number of DL subframes of the FDD cell that can be allocated to a specific TDD UL subframe greater than a predetermined value, A/N bundling is applied to the A/N's of part of the DL subframes of the FDD cell. By this means, even when a new HARQ timing is employed, it becomes possible to employ PUCCH format 3.

### (Structure of Radio Communication System)

Now, an example of a radio communication system according to the present embodiment will be described in detail below.

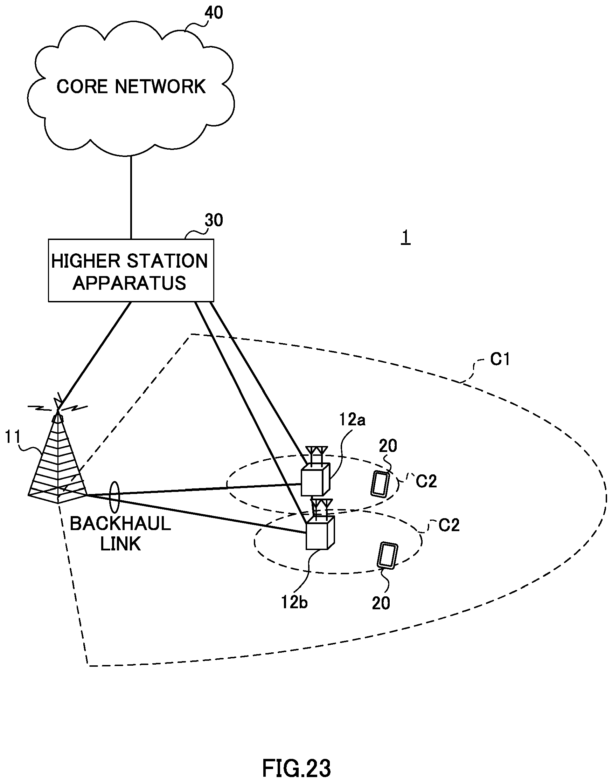

FIG. 23 is a schematic structure diagram of the radio communication system according to the present embodiment. Note that the radio communication system shown in FIG. 23 is a system to incorporate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G," "FRA (Future Radio Access)," etc.

The radio communication system 1 shown in FIG. 23 includes a radio base station 11 that forms a macro cell C1, and radio base stations 12a and 12b that form small cells C2, which are placed within the macro cell C1 and which are narrower than the macro cell C1. Also, user terminals 20 are placed in the macro cell C1 and in each small cell C2. The user terminals 20 can connect with both the radio base station 11 and the radio base stations 12 (dual connectivity). Also, intra-base station CA (intra-eNB CA) or inter-base station CA (inter-eNB CA) is applied between the radio base station 11 and the radio base stations 12. Furthermore, it is possible that one of the radio base station 11 and the radio base stations 12 employ FDD and the other one employ TDD.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz and so on) and a wide bandwidth may be used, or the same carrier as that used in the radio base station 11 may be used. A new carrier type (NCT) may be used as the carrier type between the user terminals 20 and the radio base stations 12. The connection between the radio base station 11 and the radio base stations 12 (or between the radio base stations 12) is implemented by wire connection (optical fiber, the X2 interface and so on) or by wireless connection.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "home eNodeBs," "micro base stations," "transmitting/receiving points" and so on. Hereinafter the radio base stations 11 and 12 will be collectively referred to as "radio base station 10," unless specified otherwise. The user terminals 20 are terminals to support various communication schemes such as LTE, LTE-A and so on, and may be both mobile communication terminals and stationary communication terminals.

In this radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands.

Now, communication channels used in the radio communication system shown in FIG. 23 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be transmitted by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, by means of the PUCCH, downlink radio quality information (CQI: Channel Quality Indicator), ACKs/NACKs and so on are communicated.

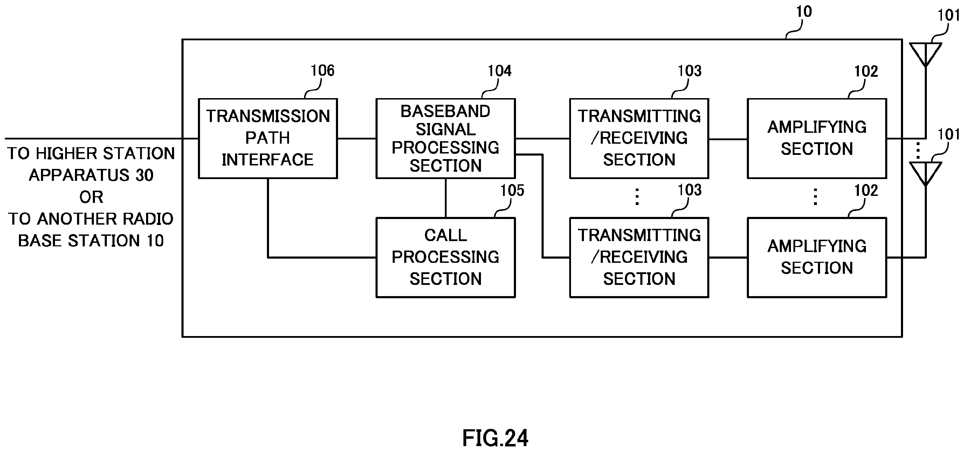

FIG. 24 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information for allowing communication in the cell, through higher layer signaling (RRC signaling, broadcast signal and so on). The information for allowing communication in the cell includes, for example, the uplink or downlink system bandwidth, feedback resource information and so on. Each transmitting/receiving section 103 converts baseband signals that are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

On the other hand, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104. Alternatively, when the user terminals employ new HARQ timings, the transmitting/receiving section 103 receives the A/N's of the FDD cell in a compressed state, via uplink control channels in the TDD cell's UL subframes.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

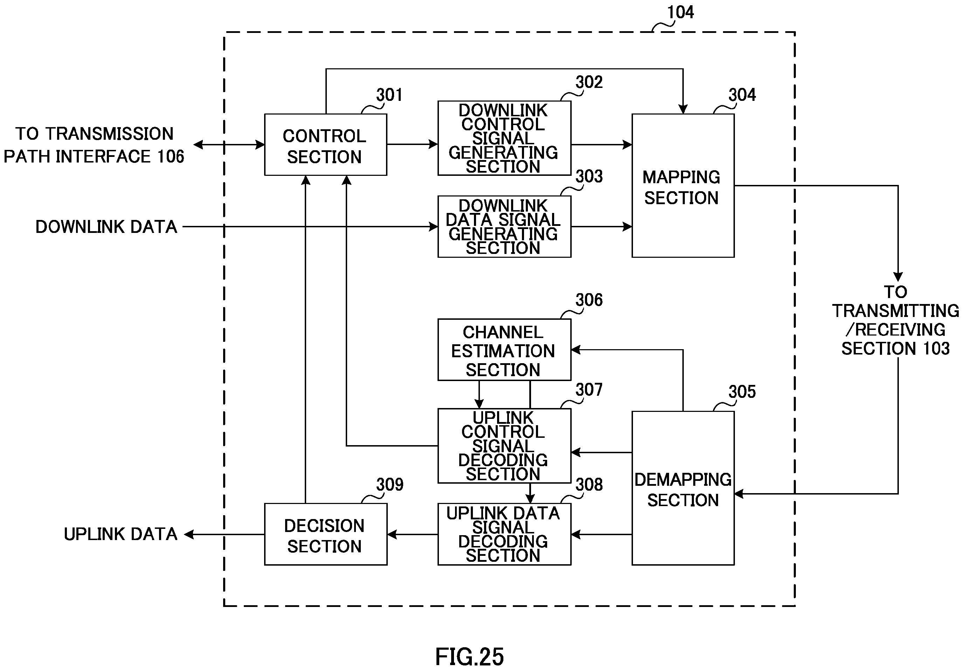

FIG. 25 is a diagram to show a principle functional structure of the baseband signal processing section 104 provided in the radio base station 10 according to the present embodiment. As shown in FIG. 25, the baseband signal processing section 104 provided in the radio base station 10 is comprised at least of a control section 301, a downlink control signal generating section 302, a downlink data signal generating section 303, a mapping section 304, a demapping section 305, a channel estimation section 306, an uplink control signal decoding section 307, an uplink data signal decoding section 308 and a decision section 309.

The control section 301 controls the scheduling of downlink user data transmitted in the PDSCH, downlink control information transmitted in the PDCCH and/or the enhanced PDCCH (EPDCCH), downlink reference signals and so on. Also, the control section 301 controls the scheduling of uplink data transmitted in the PUSCH, uplink control information transmitted in the PUCCH or the PUSCH, and uplink reference signals (allocation control). Information about the allocation control of uplink signals (uplink control signals and uplink user data) is reported to user terminals by using downlink control signals (DCI).

To be more specific, the control section 301 controls the allocation of radio resources with respect to downlink signals and uplink signals, based on command information from the higher station apparatus 30, feedback information from each user terminal 20 and so on. That is, the control section 301 functions as a scheduler. Also, when CA is executed in multiple CCs (cells), the control section 301 can select the CCs to apply the compression (for example, A/N bundling) of delivery acknowledgement signals (A/N's) to, and send a report to the user terminals. Note that, in inter-eNB CA, a control section 301 is provided for each of multiple CCs separately, and, in intra-eNB CA, a control section 301 is provided to be shared by multiple CCs.

The downlink control signal generating section 302 generates downlink control signals (PDCCH signals and/or EPDCCH signals) that are determined to be allocated by the control section 301. To be more specific, based on commands from the control section 301, the downlink control signal generating section 302 generates DL assignments, which report downlink signal allocation information, and UL grants, which report uplink signal allocation information.

The downlink data signal generating section 303 generates downlink data signals (PDSCH signals). The data signals that are generated in the data signal generating section 303 are subjected to a coding process and a modulation process, based on coding rates and modulation schemes that are determined based on CSI from each user terminal 20 and so on.

Based on commands from the control section 301, the mapping section 304 controls the allocation of the downlink control signals generated in the downlink control signal generating section 302 and the downlink data signals generated in the downlink data signal generating section 303, to radio resources.

The demapping section 305 demaps uplink signals transmitted from the user terminals and separates the uplink signals. The channel estimation section 306 estimates channel states from the reference signals included in the received signals separated in the demapping section 305, and outputs the estimated channel states to the uplink control signal decoding section 307 and the uplink data signal decoding section 308.

The uplink control signal decoding section 307 decodes the feedback signals (delivery acknowledgement signals, etc.) transmitted from the user terminals through an uplink control channel (PUCCH), and outputs the results to the control section 301. The uplink data signal decoding section 308 decodes the uplink data signals transmitted from the user terminals through an uplink shared channel (PUSCH), and outputs the results to the decision section 309. The decision section 309 makes retransmission control decisions (ACKs/NACKs) based on the decoding results in the uplink data signal decoding section 308, and, furthermore, outputs the results to the control section 301.

FIG. 25 is a diagram to show an overall structure of a user terminal 20 according to the present embodiment. A user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

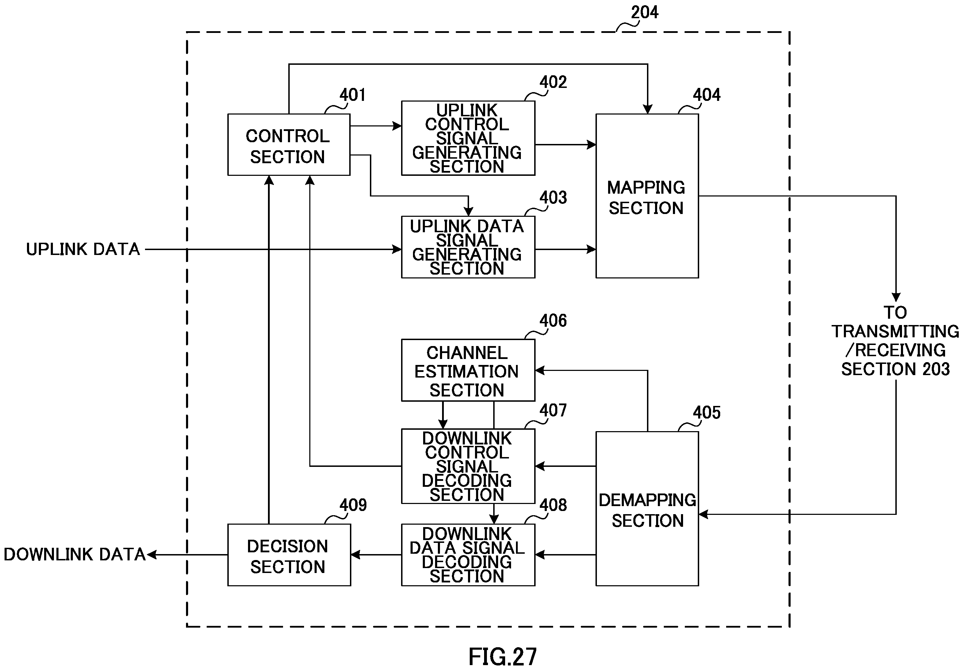

FIG. 27 is a diagram to show a principle functional structure of the baseband signal processing section 204 provided in the user terminal 20. As shown in FIG. 27, the baseband signal processing section 204 provided in the user terminal 20 is comprised at least of a control section 401 (feedback control section), an uplink control signal generating section 402, an uplink data signal generating section 403, a mapping section 404, a demapping section 405, a channel estimation section 406, a downlink control signal decoding section 407, a downlink data signal decoding section 408 and a decision section 409.

The control section 401 controls the generation of uplink control signals (feedback signals) and uplink data signals based on downlink the control signals (PDCCH signals) transmitted from the radio base station, retransmission control decisions with respect to the PDSCH signals received, and so on. The downlink control signals are output from the downlink control signal decoding section 407, and the retransmission control decisions are output from the decision section 409.

Furthermore, the control section 401 also functions as a feedback control section that controls the feedback of delivery acknowledgement signals (ACKs/NACKs) in response to PDSCH signals. To be more specific, in a communication system in which CA is employed, the control section 401 controls the selection of the cells (or the CCs) where delivery acknowledgement signals are fed back, the PUCCH resources to allocate the delivery acknowledgement signals to, and so on.

For example, in TDD-FDD CA (where the PCell employs TDD), the control section 401 (feedback control section) aggregates and allocates the A/N's for the DL signals of each cell to the PUCCH in an UL subframe of the TDD cell, and applies the above-described new HARQ timings (above method 3). Also, when the number of bits of delivery acknowledgement signals that are multiplexed on an uplink control channel in a UL subframe of the TDD cell exceeds a predetermined value, the control section 401 compresses and multiplexes a plurality of delivery acknowledgement signals of the FDD cell.

For example, the control section 401 applies A/N bundling in the time direction to a plurality of A/N's of the FDD cell multiplexed in the same UL subframe. To be more specific, when the number of A/N bits that are multiplexed in a UL subframe of the TDD cell exceeds a predetermined value, among the DL subframes of the FDD cell allocated to this UL subframe, the control section 401 applies A/N bundling in the time direction to the combination of the A/N's of part of the DL subframes (see above FIG. 8 and FIGs. 19 and 20).

Alternatively, when the number of A/N bits that are allocated to a UL subframe of the TDD cell becomes greater than a predetermined value, the control section 401 assigns a predetermined code sequence (RM code input bits) to the combination of a plurality of A/N's of the FDD cell that are assigned to the UL subframe, and applies channel selection (see above FIG. 9 and so on).

Note that, when A/N's are transmitted with an uplink data signal (PUSCH signal) simultaneously, the control section 401 multiplexes the A/N's on the uplink shared channel (PUSCH), without compression, and sends feedback.

The uplink control signal generating section 402 generates uplink control signals (feedback signals such as delivery acknowledgement signals, channel state information (CSI) and so on) based on commands from the control section 401. Also, the uplink data signal generating section 403 generates uplink data signals based on commands from the control section 401. Note that, when a UL grant is contained in a downlink control signal reported from the radio base station, the control section 401 commands the uplink data signal 403 to generate an uplink data signal.

The mapping section 404 (allocation section) controls the allocation of uplink control signals (delivery acknowledgement signals, etc.) and uplink data signals to radio resources (PUCCH and PUSCH) based on commands from the control section 401. For example, depending on the CC (cell) that is subject to feedback (PUCCH transmission), the mapping section 404 allocates delivery acknowledgement signals to the PUCCH of that CC.

The demapping section 405 demaps downlink signals transmitted from the radio base station 10 and separates the downlink signals. The channel estimation section 407 estimates channel states from the reference signals included in the received signals separated in the demapping section 406, and outputs the estimated channel states to the downlink control signal decoding section 407 and the downlink data signal decoding section 408.

The downlink control signal decoding section 407 decodes the downlink control signals (PDCCH signal) transmitted in the downlink control channel (PDCCH), and outputs scheduling information (information regarding the allocation to uplink resources) to the control section 401.

The downlink data signal decoding section 408 decodes the downlink data signals transmitted in the downlink shared channel (PDSCH), and outputs the results to the decision section 409. The decision section 409 makes retransmission control decisions (ACKs/NACKs) based on the decoding results in the downlink data signal decoding section 408, and, furthermore, outputs the results to the control section 401.

Now, although the present invention has been described in detail with reference to the above embodiment, it should be obvious to a person skilled in the art that the present invention is by no means limited to the embodiment described herein. A plurality of examples described above may be combined and implemented as appropriate. Consequently, the description
herein is only provided for the purpose of illustrating examples, and should by no means be construed to limit the present invention in any way.

## Claims

1. A user terminal (20) configured to communicate with a plurality of FDD cells and a TDD cell employing carrier aggregation, the user terminal comprising:
a receiving section (203) configured to receive DL signals transmitted from the TDD cell and at least two of the plurality of FDD cells; and
a feedback control section (401) configured to allocate and feed back delivery acknowledgement signals in response to the DL signals in a predetermined UL subframe,
wherein the feedback control section (401) is further configured to aggregate and allocate the delivery acknowledgement signals for the DL signals from the TDD cell and at least two of the plurality of FDD cells, in an uplink control channel in the UL subframe of the TDD cell, and, furthermore, to apply a feedback mechanism that makes it possible to allocate delivery acknowledgement signals for all DL subframes of the plurality of FDD cells, by configuring it such that when the number of bits of the delivery acknowledgement signals that are multiplexed in the uplink control channel of the UL subframe of the TDD cell exceeds a predetermined value, the feedback control section (401) is configured to determine application of A/N bundling to the FDD cells prioritised according to an order of index numbers assigned to these cells and compress and multiplex, by A/N bundling, a plurality of delivery acknowledgement signals of FDD cells that are determined to be applied with the A/N bundling, and
the predetermined value is the maximum number of bits of delivery acknowledgement signals that are supported to be transmitted in the uplink control channel.

2. The user terminal (20) according to claim 1, wherein the feedback control section (401) is further configured to apply A/N bundling in the time direction to the plurality of delivery acknowledgement signals of the FDD cells that are multiplexed in the same UL subframe.

3. The user terminal (20) according to claim 1 or claim 2, wherein the feedback control section (401) is further configured to, when the number of bits of the delivery acknowledgement signals that are multiplexed in the UL subframe of the TDD cell becomes greater than the predetermined value, apply A/N bundling in the time direction to a combination of delivery acknowledgement signals of part of the DL subframes among the DL subframes of the FDD cell that are allocated to the UL subframe.

4. A base station (10), that uses TDD, configured to communicate with a user terminal (20) by executing carrier aggregation with other base stations that use FDD, the base station (10) comprising:
a generating section configured to generate a DL signal;
a transmission section (103) configured to allocate the DL signal to a DL subframe and transmit the DL subframe to the user terminal (20); and
a receiving section (103) configured to receive a delivery acknowledgement signal transmitted from the user terminal (20) via a UL subframe,
wherein the receiving section (103) is further configured to, when the user terminal (20) aggregates and allocates delivery acknowledgement signals for DL signals from the TDD cell and at least two of the plurality of FDD cells, in an uplink control channel in the UL subframe of the TDD cell, and, furthermore, applies a feedback mechanism that makes it possible to allocate delivery acknowledgement signals for all DL subframes of a plurality of FDD cells, receive the delivery acknowledgement signals of the FDD cells, via the uplink control channel of the UL subframe of the TDD cell, by configuring it such that when the number of bits of the delivery acknowledgement signals that are multiplexed in the uplink control channel of the UL subframe of the TDD cell exceeds a predetermined value, the user terminal (20) is configured to determine application of A/N bundling to the FDD cells prioritised according to an order of index numbers assigned to these cells and compress and multiplex, by A/N bundling, a plurality of delivery acknowledgement signals of FDD cells that are determined to be applied with the A/N bundling, and
the predetermined value is the maximum number of bits of delivery acknowledgement signals that are supported to be transmitted in the uplink control channel.

5. A radio communication method for a user terminal (20) that communicates with a plurality of FDD cells and a TDD cell employing carrier aggregation, the radio communication method comprising:
receiving DL signals transmitted from the TDD cell and at least two of the plurality of FDD cells; and
aggregating and allocating the delivery acknowledgement signals for the DL signals from the TDD cell and at least two of the plurality of FDD cells, in an uplink control channel in a UL subframe of the TDD cell, and, furthermore, applying a feedback mechanism that makes it possible to allocate delivery acknowledgement signals for all DL subframes of the plurality of FDD cells by configuring it such that when the number of bits of the delivery acknowledgement signals that are multiplexed in the uplink control channel of the UL subframe of the TDD cell exceeds a predetermined value, the user terminal (20) is configured to determine application of A/N bundling to the FDD cells prioritised according to an order of index numbers assigned to these cells and compress and multiplex, by A/N bundling, a plurality of delivery acknowledgement signals of the FDD cells that are determined to be applied with the A/N bundling, and
the predetermined value is the maximum number of bits of delivery acknowledgement signals that are supported to be transmitted in the uplink control channel.

## Patentansprüche

1. Benutzerendvorrichtung (20), die zum Kommunizieren mit einer Vielzahl von FDD-Zellen und einer TDD-Zelle unter Verwendung einer Trägeraggregation konfiguriert ist, wobei die Benutzerendvorrichtung umfasst:
eine Empfangseinheit (203), die zum Empfangen von DL-Signalen konfiguriert ist, die von der TDD-Zelle und wenigstens zwei der Vielzahl von FDD-Zellen gesendet werden; und
eine Rückkopplungssteuereinheit (401), die konfiguriert ist, Übermittlungsbestätigungssignale als Antwort auf die DL-Signale in einem vorbestimmten UL-Unterrahmen zuzuweisen und zurückzuführen,
wobei die Rückkopplungssteuereinheit (401) weiter konfiguriert ist, die Übermittlungsbestätigungssignale für die DL-Signale von der TDD-Zelle und von wenigstens zwei von der Vielzahl von FDD-Zellen in einem Uplink-Steuerkanal in dem UL-Unterrahmen der TDD-Zelle zu aggregieren und zuzuweisen, und weiter einen Rückkopplungsmechanismus anzuwenden, der es ermöglicht, Übermittlungsbestätigungssignale für alle DL-Unterrahmen von der Vielzahl von FDD-Zellen zuzuweisen, indem er sie so konfiguriert, dass wenn die Anzahl der Bits der in dem Uplink-Steuerkanal des UL-Unterrahmens der TDD-Zelle gemultiplexten Übermittlungsbestätigungssignale einen vorbestimmten Wert überschreitet, die Rückkopplungssteuereinheit (401) konfiguriert ist, eine Anwendung einer A/N-Bündelung auf die FDD-Zellen zu bestimmen, die gemäß einer Reihenfolge von diesen Zellen zugewiesenen Indexnummern priorisiert sind, und durch A/N-Bündelung mehrere Übermittlungsbestätigungssignale von FDD-Zellen, die mit der A/N-Bündelung zur Anwendung bestimmt werden, komprimiert und multiplext, und
wobei der vorbestimmte Wert die maximale Anzahl von Bits von Übermittlungsbestätigungssignalen ist, die unterstützt werden, um in dem Uplink-Steuerkanal übertragen zu werden.

2. Benutzerendvorrichtung (20) nach Anspruch 1, wobei die Rückkopplungssteuereinheit (401) weiter konfiguriert ist, eine A/N-Bündelung in der Zeitrichtung an die Vielzahl von Übermittlungsbestätigungssignalen der FDD-Zellen anzuwenden, die in demselben UL-Unterrahmen gemultiplext sind

3. Benutzerendvorrichtung (20) nach Anspruch 1 oder Anspruch 2, wobei die Rückkopplungssteuereinheit (401) weiter konfiguriert ist, wenn die Anzahl von Bits der Übermittlungsbestätigungssignale, die in dem UL-Unterrahmen der TDD-Zelle gemultiplext werden, größer wird als der vorbestimmte Wert, eine A/N-Bündelung in der Zeitrichtung auf eine Kombination von Übermittlungsbestätigungssignalen eines Teils der DL-Unterrahmen unter den DL-Unterrahmen der FDD-Zelle anzuwenden, die dem UL-Unterrahmen zugeordnet sind.

4. Basisstation (10), die TDD verwendet, die konfiguriert ist, mit einer Benutzerendvorrichtung (20) durch Ausführen einer Trägeraggregation mit anderen Basisstationen, die FDD verwenden, zu kommunizieren, wobei die Basisstation (10) umfasst:
eine Erzeugungseinheit, die konfiguriert ist, ein DL-Signal zu erzeugen;
eine Sendeeinheit (103), die konfiguriert ist, das DL-Signal einem DL-Unterrahmen zuzuordnen und den DL-Unterrahmen an die Benutzerendvorrichtung (20) zu senden; und
eine Empfangseinheit (103), die konfiguriert ist, ein Übermittlungsbestätigungssignal zu empfangen, das von der Benutzerendvorrichtung (20) über einen UL-Unterrahmen gesendet wird,
wobei die Empfangseinheit (103) weiter konfiguriert ist, wenn die Benutzerendvorrichtung (20) die Übermittlungsbestätigungssignale für die DL-Signale von der TDD-Zelle und von wenigstens zwei von der Vielzahl von FDD-Zellen in einem Uplink-Steuerkanal in dem UL-Unterrahmen der TDD-Zelle aggregiert und zuweist, und weiter einen Rückkopplungsmechanismus, der es ermöglicht, Übermittlungsbestätigungssignale für alle DL-Unterrahmen einer Vielzahl von FDD-Zellen zuzuordnen, anwendet, die Übermittlungsbestätigungssignale der FDD-Zellen über den Uplink-Steuerkanal des UL-Unterrahmens der TDD-Zelle empfangen, indem er sie derart konfiguriert, dass, wenn die Anzahl von Bits der Übermittlungsbestätigungssignale, die in dem Uplink-Steuerkanal des UL-Unterrahmens der TDD-Zelle gemultiplext sind, einen vorbestimmten Wert überschreitet, die Benutzerendvorrichtung (20) konfiguriert ist, eine Anwendung einer A/N-Bündelung an die FDD-Zellen zu bestimmen, die gemäß einer Reihenfolge von Indexnummern, die diesen Zellen zugewiesen sind, priorisiert sind, und durch A/N-Bündeln eine Vielzahl von Übermittlungsbestätigungssignalen von FDD-Zellen, die bestimmt sind, mit der A/N-Bündelung angewendet zu werden, zu komprimieren und multiplexen, und
der vorbestimmte Wert die maximale Anzahl von Bits von Übermittlungsbestätigungssignalen ist, die unterstützt werden, um in dem Uplink-Steuerkanal übertragen zu werden.

5. Funkkommunikationsverfahren für eine Benutzerendvorrichtung (20), die mit einer Vielzahl von FDD-Zellen und einer TDD-Zelle unter Verwendung einer Trägeraggregation kommuniziert, wobei das Funkkommunikationsverfahren umfasst:
Empfangen von DL-Signalen, die von der TDD-Zelle und wenigstens zwei von der Vielzahl von FDD-Zellen gesendet werden; und
Aggregieren und Zuweisen der Übermittlungsbestätigungssignale für die DL-Signale von der TDD-Zelle und von wenigstens zwei von der Vielzahl von FDD-Zellen in einem Uplink-Steuerkanal in einem UL-Unterrahmen der TDD-Zelle, und, weiter Anwenden eines Rückkopplungsmechanismus, der es ermöglicht, Übermittlungsbestätigungssignale für alle DL-Unterrahmen von der Vielzahl von FDD-Zellen zuzuweisen, indem er sie konfiguriert, dass wenn die Anzahl der Bits der in dem Uplink-Steuerkanal des UL-Unterrahmens der TDD-Zelle gemultiplexten Übermittlungsbestätigungssignale einen vorbestimmten Wert überschreitet, die Benutzerendvorrichtung (20) konfiguriert ist, eine Anwendung einer A/N-Bündelung an die FDD-Zellen zu bestimmen, die gemäß einer Reihenfolge von Indexnummern, die diesen Zellen zugewiesen sind, priorisiert sind, und durch A/N-Bündeln eine Vielzahl von Übermittlungsbestätigungssignalen von den FDD-Zellen, von denen bestimmt wird, dass sie mit der A/N-Bündelung angewendet werden sollen, zu komprimieren und multiplexen, und
wobei der vorbestimmte Wert die maximale Anzahl von Bits von Übermittlungsbestätigungssignalen ist, die unterstützt werden, um in dem Uplink-Steuerkanal übertragen zu werden.

## Revendications

1. Terminal utilisateur (20) configuré pour communiquer avec une pluralité de cellules FDD et une cellule TDD en utilisant une agrégation de porteuses, le terminal utilisateur comprenant :
une section de réception (203) configurée pour recevoir des signaux DL transmis à partir de la cellule TDD et d'au moins deux de la pluralité de cellules FDD ; et
une section de commande de rétroaction (401) configurée pour allouer et réinjecter des signaux d'accusé de réception de délivrance en réponse aux signaux DL dans une sous-trame UL prédéterminée,
dans lequel la section de commande de rétroaction (401) est configurée en outre pour agréger et allouer les signaux d'accusé de réception de délivrance pour les signaux DL provenant de la cellule TDD et d'au moins deux de la pluralité de cellules FDD, dans un canal de commande de liaison montante dans la sous-trame UL de la cellule TDD et, par ailleurs, pour appliquer un mécanisme de rétroaction qui permet d'allouer des signaux d'accusé de réception de délivrance pour toutes les sous-trame DL de la pluralité de cellules FDD, en le configurant de telle manière que quand le nombre de bits des signaux d'accusé de réception de délivrance qui sont multiplexés dans le canal de commande de liaison montante de la sous-trame UL de la cellule TDD dépasse une valeur prédéterminée, la section de commande de rétroaction (401) soit configurée pour déterminer une application de regroupement A/N aux cellules FDD priorisées en fonction d'un ordre de numéros d'indice attribués à ces cellules, et pour compresser et multiplexer, par regroupement A/N, une pluralité de signaux d'accusé de réception de délivrance de cellules FDD qui sont déterminées comme devant se voir appliquer le regroupement A/N, et
la valeur prédéterminée est le nombre maximal de bits de signaux d'accusé de réception de délivrance qui sont supportés pour être transmis dans le canal de commande de liaison montante.

2. Terminal utilisateur (20) selon la revendication 1, dans lequel la section de commande de rétroaction (401) est configurée en outre pour appliquer un regroupement A/N dans la même direction temporelle à la pluralité de signaux d'accusé de réception de délivrance des cellules FDD qui sont multiplexés dans la même sous-trame UL.

3. Terminal utilisateur (20) selon la revendication 1 ou la revendication 2, dans lequel la section de commande de rétroaction (401) est configurée en outre pour, quand le nombre de bits des signaux d'accusé de réception de délivrance qui sont multiplexés dans la sous-trame UL de la cellule TDD devient supérieur à la valeur prédéterminée, appliquer un regroupement A/N dans la direction temporelle à une combinaison de signaux d'accusé de réception de délivrance d'une partie des sous-trames DL parmi les sous-trames DL de la cellule FDD qui sont alloués à la sous-trame UL.

4. Station de base (10), qui utilise TDD, configurée pour communiquer avec un terminal utilisateur (20) en exécutant une agrégation de porteuses avec d'autres stations de base qui utilisent FDD, la station de base (10) comprenant :
une section de génération configurée pour générer un signal DL ;
une section de transmission (103) configurée pour allouer le signal DL à une sous-trame DL et transmettre la sous-trame DL au terminal utilisateur (20) ; et
une section de réception (103) configurée pour recevoir un signal d'accusé de réception de délivrance transmis à partir du terminal utilisateur (20) par le biais d'une sous-trame UL,
dans lequel la section de réception (103) est configurée en outre pour, quand le terminal utilisateur (20) agrège et alloue des signaux d'accusé de réception de délivrance pour des signaux DL provenant de la cellule TDD et d'au moins deux de la pluralité de cellules FDD, dans un canal de commande de liaison montante dans la sous-trame UL de la cellule TDD et, par ailleurs, applique un mécanisme de rétroaction qui permet d'allouer des signaux d'accusé de réception de délivrance pour toutes les sous-trame DL d'une pluralité de cellules FDD, recevoir les signaux d'accusé de réception de délivrance des cellules FDD, par le biais du canal de commande de liaison montante de la sous-trame UL de la cellule TDD, en le configurant de telle manière que quand le nombre de bits des signaux d'accusé de réception de délivrance qui sont multiplexés dans le canal de commande de liaison montante de la sous-trame UL de la cellule TDD dépasse une valeur prédéterminée, le terminal utilisateur (20) soit configuré pour déterminer une application de regroupement A/N aux cellules FDD priorisées en fonction d'un ordre de numéros d'indice attribués à ces cellules, et compresser et multiplexer, par regroupement A/N, une pluralité de signaux d'accusé de réception de délivrance de cellules FDD qui sont déterminées comme devant se voir appliquer le regroupement A/N, et
la valeur prédéterminée est le nombre maximal de bits de signaux d'accusé de réception de délivrance qui sont supportés pour être transmis dans le canal de commande de liaison montante.

5. Procédé de radiocommunication pour un terminal utilisateur (20) qui communique avec une pluralité de cellules FDD et une cellule TDD employant une agrégation de porteuses, le procédé de radiocommunication comprenant :
la réception de signaux DL transmis à partir de la cellule TDD et d'au moins deux de la pluralité de cellules FDD ; et
l'agrégation et l'allocation des signaux d'accusé de réception de délivrance pour les signaux DL provenant de la cellule TDD et d'au moins deux de la pluralité de cellules FDD, dans un canal de commande de liaison montante dans une sous-trame UL de la cellule TDD et, par ailleurs, l'application d'un mécanisme de rétroaction qui permet d'allouer des signaux d'accusé de réception de délivrance pour toutes les sous-trame DL de la pluralité de cellules FDD, en le configurant de telle manière que quand le nombre de bits des signaux d'accusé de réception de délivrance qui sont multiplexés dans le canal de commande de liaison montante de la sous-trame UL de la cellule TDD dépasse une valeur prédéterminée, le terminal utilisateur (20) soit configuré pour déterminer une application de regroupement A/N aux cellules FDD priorisées en fonction d'un ordre de numéros d'indice attribués à ces cellules, et pour compresser et multiplexer, par regroupement A/N, une pluralité de signaux d'accusé de réception de délivrance des cellules FDD qui sont déterminées comme devant se voir appliquer le regroupement A/N, et
la valeur prédéterminée est le nombre maximal de bits de signaux d'accusé de réception de délivrance qui sont supportés pour être transmis dans le canal de commande de liaison montante.
